# EUROPÄISCHE PATENTSCHRIFT

(11) **EP 3 909 740 B1**
(45) Veröffentlichungstag und Bekanntmachung des Hinweises auf die Patenterteilung: **02.03.2022**
(21) Anmeldenummer: 21158819.9
(22) Anmeldetag: 23.02.2021
(51) Int. Cl.: B29C 45/14

(54) **VERFAHREN ZUR HERSTELLUNG EINES VERBUNDKÖRPERS**
METHOD FOR PRODUCING A COMPOUND BODY
PROCÉDÉ DE FABRICATION D'UN CORPS COMPOSITE

(30) Priorität: 15.05.2020 DE 102020113304
(43) Veröffentlichungstag der Anmeldung: 17.11.2021
(73) Patentinhaber: Spies Kunststoffe GmbH, 49326 Melle (DE)
(72) Erfinder: Ludger, Kohake, 49393 Lohne (DE); Thomas, Führing, 49326 Melle (DE)
(74) Vertreter: Truckenmüller, Frank

(56) Entgegenhaltungen:
- EP-A1- 2 236 264
- EP-A1- 2 559 636
- WO-A2-03/071350
- DE-A1-102005 029 610
- JP-A- 2003 312 678
- US-A1- 2007 090 121

## Beschreibung

Die Erfindung betrifft ein Verfahren zur Herstellung eines Verbundkörpers mit den Merkmalen des Oberbegriffs des Anspruches 1.

Zur Herstellung von mit bedruckten Außenflächen versehenen Verbundkörpern, insbesondere Verbund-Hohlkörpern, beispielsweise Verpackungsbehältern zur Aufnahme von Nahrungsmitteln oder Flüssigkeiten, sind verschiedene Verfahren aus der Praxis bekannt geworden.

Bei dem sogenannten "In-Mould-Labeling" (IML) wird ein bereits bedrucktes Etikett (Label) aus einem thermoplastischen Kunststoff, beispielsweise aus Polypropylen (PP), in eine Gussform ("Mould") gelegt, die bereits die Form des Endprodukts hat. Anschließend wird ein schmelzflüssiger, thermoplastischer Kunststoff, beispielsweise aus Polypropylen (PP), unter Anwendung des Spritzgußverfahrens bzw. Sprizgießens in die Gussform gespritzt, wobei das Label mit dem schmelzflüssigen Kunststoff hinterspritzt wird. Dabei verschmilzt der eingespritzte thermoplastische Kunststoff mit dem Label, wobei er beim Aushärten in Verbindung mit dem von ihm getragenen Label die Form der Gussform annimmt. In dem, fertigen Endprodukt, also in dem Verbundkörper, bilden das Label und der Labelträger eine Einheit, in welcher das Label und der Labelträger nicht ohne Zerstörung voneinander trennbar sind. Das In-Mould-Labeling kann beim Spießgießen (Spritzguß), beim Blasformen oder beim Thermoformen zum Einsatz kommen. Beim In-Mould-Labeling-Verfahren wird das jeweilige Endprodukt, beispielsweise eine Verpackung, in einem einzigen Arbeitsschritt hergestellt und mit einem bedruckten Etikett (Label) versehen. Damit entfällt die Lagerung von Blankoverpackungen. Dadurch werden entsprechende Lager- und Transportkosten eingespart. Außerdem wird beim In-Mould-Labeling die Umwelt geschont, denn der Etikettenträger und das Etikett bestehen aus demselben Material und können daher sortenrein recycelt werden.

Bei abwickelbaren Formflächen, also bei kegeligen- oder zylindrischen Formflächen, können die bedruckten Folien (Etiketten) an der Formoberfläche des Werkzeuges faltenfrei anliegen.

Zum Spritzgießen von Verbundkörpern, die kegelige Außenoberflächen aufweisen, werden Spritzgießformen mit kegeligen Innenoberflächen eingesetzt. In diese Spritzgießform kann ein kegelförmiger Folien-Wickelkörper eingelegt werden, der eine kegelige Außenoberfläche aufweist und der aus einem bedruckten Folienabschnitt hergestellt ist. Das Einlegen des bedruckten Folien-Wickelkörpers in die Spritzgießform kann derart erfolgen, dass die bedruckte, kegelige Außenoberfläche des Folien-Wickelkörpers an der kegeligen Innenoberfläche der Spritzgießform vollflächig und faltenfrei angelegt wird, wobei der Folien-Wickel-körper in dem so angelegten Zustand beispielsweise mittels elektrostatischer Aufladung an der Innenoberfläche der Sprießgießform fixiert wird.

Zum Spritzgießen von Verbundkörpern, die zylindrische Außenoberflächen aufweisen, werden Spritzgießformen mit zylindrischen Innenoberflächen eingesetzt. In diese Spritzgießform kann ein zylinderförmiger Folien-Wickelkörper eingelegt werden, der eine zylindrische Außenoberfläche aufweist und der aus einem bedruckten Folienabschnitt hergestellt ist. Das Einlegen des bedruckten Folien-Wickelkörpers in die Spritzgießform kann derart erfolgen, dass die bedruckte, zylindrische Außenoberfläche des Folien-Wickelkörpers vollflächig und faltenfrei an der zylindrischen Innenoberfläche der Spritzgießform angelegt wird, wobei der Folien-Wickelkörper in dem so angelegten Zustand beispielsweise mittels elektrostatischer Aufladung an der Innenoberfläche der Sprießgießform fixiert wird.

Beim Einspritzen der fließfähigen und verfestigbaren, insbesondere aushärtbaren Masse, bei der es sich um eine Schmelze eines thermoplastischen Kunststoffes (Thermoplast) handeln kann, kommt es zu keiner Faltenbildung in den vorgenannten Folien-Wickelkörpern. Diese Folien-Wickelkörper weisen in der Haupt-Fließrichtung der Schmelzfront liegende, gerade Folienstöße, mit oder ohne Überlappung in Umfangsrichtung, auf.

Bei nicht abwickelbaren Formflächen jedoch, die eine gewölbte Formoberfläche aufweisen, wird die Folie (das Etikett) zwar ebenfalls in ihrer geometrisch wickelbaren Form also beispielsweise als Folien-Wickel-Hohl-Zylinderkörper oder als Folien-Wickel-Hohl-Kegelkörper in die gewölbte Formoberfläche des Werkzeuges eingelegt. Dabei kann die Folie jedoch nicht ohne Entstehung von Falten an der gewölbten Formoberfläche der Spritzgießform anliegen. Dadurch bedingt kommt es beim Hinterspritzen der Folien-Wickelkörper-Innenwandfläche zum Einschließen von Falten und es kann auch im Bereich des Folienstoßes zu einem Hinterfließen der Schmelze kommen, so dass diese auf die Folien-Wickelkörper-Außenwandfläche des Etiketts gelangen kann. Dadurch kann es zu optischen und/oder haptischen Beeinträchtigungen bzw. Störungen kommen.

Zur Lösung dieses Problems sind aus der Praxis Maßnahmen bekannt geworden, wie das Einbringen von Schlitzen in den Dehnungs- und Streckungsbereichen der Folien, wodurch die entstehenden Wölbungen und Falten der Folien bei geschlossener Form reduziert werden können. Ebenfalls aus der Praxis sind auch andere Lösungsversuche bekannt geworden, bei denen durch Einbringen von Fließhilfen versucht wurde, das Problem zu lösen.

Die Nachteile dieser bekannten Lösungen sind:
- Die Schlitze sind am späteren Produkt sichtbar; die Druckbilder werden in diesen Bereichen gestört.
- Hinterfließungen im Stoßbereich treten weiterhin auf.
- Fließhilfen führen zu einer Beeinträchtigung der Optik und/oder der Haptik und erhöhen unter Umständen das Gewicht des Produktes.

Zur Herstellung von Verbund-Hohlkörpern mit nicht abwickelbaren, bedruckten Oberflächen, ist aus der Praxis auch ein Verfahren bekannt geworden, bei dem ein unbedruckter Körper (Blanko-Körper) hergestellt wird, der eine nicht abwickelbare Oberfläche aufweist und der in einem separaten Arbeitsschritt mit einem auch als "Shrink Sleeve" bezeichneten Schrumpffolien-Etikett versehen wird. Dabei handelt es sich um eine spezielle, bedruckte Kunststoff-Folie, die rundum auf den Blanko-Körper aufgebracht wird. Die "Shrink Sleeves" (Schrumpffolien-Etiketten) werden von einer Rolle im offenen Format bedruckt, nach der Bedruckung zu einem Schlauch verklebt, dann produktgerecht zugeschnitten und anschließend über den Körper gestülpt. Daran anschließend wird das "Shrink Sleeve" (Schrumpffolien-Etikett) durch eine thermische Behandlung bei erhöhter Temperatur in einem sogenannten Schrumpftunnel auf den Körper geschrumpft. Mit "Shrink Sleeves" (Schrumpffolien-Etiketten) wird der Körper ebenfalls rundum belabelt. Mit diesem Verfahren lassen sich Körper, beispielsweise Behälter, mit nahezu beliebigen Konturen faltenfrei mit den bedruckten Folien einkleiden. Dabei muss jedoch das Druck- bzw. Schriftbild beim Bedruckten der Schrumpf-Folie derart verzerrt aufgedruckt werden, dass nach dem Aufschrumpfen der Schrumpf-Folie auf den Körper das gewünschte Druck- bzw. Schriftbild erreicht wird. Dieses Verfahren erfordert zwei getrennte Arbeitsschritte, nämlich zum einen die Herstellung des Körpers und zum anderen das Aufschrumpfen der bedruckten Schrumpf-Folie auf den Köper. Außerdem ist ein Transport und eine Lagerung der Blanko-Körper erforderlich. Dies alles ist vergleichsweise aufwändig und teuer. Als Werkstoff für die Schrumpffolien-Etiketten wird vorzugsweise PET, OPS, PLA oder PVC eingesetzt. Wenn der Werkstoff des Körpers aus anderen Werkstoffen besteht, beispielsweise aus Polypropylen (PP), ist kein sortenreines Recycling der Verbundkörper möglich.

Aus der EP 2 236 264 A1 ist ein Verfahren zur Herstellung eines Behälters bekannt geworden, welches die Schritte Positionieren eines In-Mould-Etiketts in einer Form und Einspritzen eines Kunststoffmaterials in die Form umfasst, so dass dieses ein Trägerskelett mit mindestens einem durch das Etikett verschlossenen Fensterabschnitt bildet. Mittels dieses Verfahrens ist ein Behälter für Lebensmittelzutaten herstellbar, der ein geformtes Trägerskelett umfasst, welches an mindestens einer Wand des Behälters vorhanden ist und welches mindestens ein Fenster bildet, und der ferner ein In-Mould-Etikett umfasst, das durch In-Mould-Etikettierung mit dem Trägerskelett versiegelt ist, so dass es das mindestens eine Fenster verschließt. Bei diesem Verfahren verlaufen die Ränder von sich auf einem langgestreckten Stützglied des Trägerskeletts überlappenden Randabschnitten des In-Mould-Etiketts parallel zu diesem Stützglied des Trägerskeletts. Bei diesem Verfahren sind ebenfalls die vorstehenden genannten Nachteile unvermeidlich.

Der Erfindung liegt die Aufgabe zugrunde, ein Verfahren zur Herstellung eines, Verbundkörpers der eingangsgenannten Art zur Verfügung zu stellen, bei dem das Etikett des Verbundkörpers auch ohne ein Einbringen von Schlitzen und/oder Fließhilfen frei von Falten und Masseteilen der hinterspritzten Masse ist, so dass der Verbundkörper diesbezüglich keine optischen und sonstigen Beeinträchtigungen aufweist.

Diese Aufgabe wird durch das Verfahren nach Anspruch 1 gelöst.

Erfindungsgemäß geht es also um ein Verfahren zur Herstellung eines Verbundkörpers, insbesondere eines Verbund-Hohlkörpers, vorzugsweise in Form eines Behälters, insbesondere Verpackungsbehälters zur Aufnahme von Behälterinhalten wie Nahrungsmitteln oder Flüssigkeiten, mittels Spritzgießen, wobei der Verbundkörper sich entlang seiner gedachten Verbundkörper-Zentralachse erstreckt und eine, vorzugsweise ringförmige oder rohrförmige, Verbundkörper-Wand aufweist, die, vorzugsweise einen Verbundkörper-Hohlraum des Verbund-Hohlkörpers umschließt und, eine um die Verbundkörper-Zentralachse umlaufende und sich entlang der Verbundkörper-Zentralachse erstreckende Verbundkörper-Mantel-Außenfläche eines, vorzugsweise bedruckten, Etiketts, vorzugsweise und eine den Verbundkörper-Hohlraum begrenzende Verbundkörper-Mantel-Innenfläche, aufweist, das auf seiner von der Verbundkörper-Mantel-Außenfläche weg weisenden Etikett-Innenseite mit einem um die Verbundkörper-Zentralachse umlaufenden und sich entlang der Verbundkörper-Zentralachse erstreckenden Etikett-Trägerwandteil der Verbundkörper-Wand dauerhaft und nicht zerstörungsfrei trennbar verbunden ist, und wobei die Verbundkörper-Mantel-Außenfläche des Etiketts wenigstens eine sich entlang der Verbundkörper-Zentralachse erstreckende, vorzugsweise um die Verbundkörper-Zentralachse umlaufende, Verbundkörper-Wölbung aufweist, und wobei zur Herstellung des Verbundkörpers ein aus wenigstens zwei Werkzeugformen, vorzugsweise wenigstens eine Matrize und wenigstens eine, insbesondere mit einem Werkzeugkern gebildete, Patrize, gebildetes mehrteiliges Spritzgießwerkzeug verwendet wird, und wobei wenigstens eine erste Werkzeugform der wenigstens zwei Werkzeugformen einen Werkzeugform-Hohlraum aufweist, der mit einer um seine gedachte Werkzeugform-Hohlraum-Zentralachse umlaufenden und sich entlang der Werkzeugform-Hohlraum-Zentralachse erstreckenden Werkzeugform-Hohlraum-Mantelfläche begrenzt ist, die wenigstens eine sich entlang der Werkzeugform-Hohlraum-Zentralachse erstreckende, vorzugsweise um die Werkzeugform-Hohlraum-Zentralachse umlaufende, Werkzeugform-Hohlraum-Wölbung aufweist, und wobei das Sprießgießwerkzeug von einer Werkzeug-Öffnungsstellung, in der die erste Werkzeugform und eine zweite Werkzeugform der wenigstens zwei Werkzeugformen voneinander abgehoben sind, in eine Werkzeug-Schließstellung überführbar ist, und umgekehrt, in der die erste Werkzeugform und die zweite Werkzeugform unter Einschließen eines den Werkzeugform-Hohlraum der ersten Werkzeugform enthaltenden Werkzeug-Hohlraums zur Aufnahme eines zur Ausbildung des Etiketts bestimmten, vorzugsweise ringförmigen oder rohrförmigen, Folien-Wickelkörpers und zur Aufnahme einer zur Ausbildung des Etikett-Träger-Wandteils bestimmten, fließfähigen, verfestigbaren Masse aneinander anliegen, wobei in einem ersten Verfahrensschritt der, insbesondere ringförmige oder rohrförmige, Folien-Wickelkörper, vorzugsweise aus einem, insbesondere unter den während des Einspritzens der fließfähigen, verfestigbaren, vorzugsweise aushärtbaren, Masse auftretenden Verarbeitungsbedingungen, dehnbaren Folien-Werkstoff, der eine um seine gedachte Folien-Wickelkörper-Zentralachse in einer Umlaufrichtung umlaufende und sich entlang der Folien-Wickelkörper-Zentralachse erstreckende Folien-Wickelkörper-Wand aufweist, die einen Folien-Wickelkörper-Innenraum, insbesondere Folien-Wickelkörper-Hohlraum, des Folien-Wickelkörpers umschließt und die eine, vorzugsweise bedruckte, Folien-Wickelkörper-Außenfläche und eine von dieser weg weisende Folien-Wickelkörper-Innenfläche aufweist, die den Folien-Wickelkörper-Innenraum, insbesondere den Folien-Wickelkörper-Hohlraum, begrenzt und der ausgehend von einem biegsamen und wickelbaren Folienabschnitt, der eine, vorzugsweise bedruckte, erste Folienfläche und eine von dieser, vorzugsweise in eine entgegengesetzte Richtung, weg weisende, vorzugsweise sich parallel zu dieser erstreckende, zweite Folienfläche aufweist und der einen mit einem ersten Folienabschnitt-Rand begrenzten, ersten Folien-End-Abschnitt und einen, vorzugsweise sich davon weg erstreckenden, mit einem zweiten Folienabschnitt-Rand begrenzten, zweiten Folien-Endabschnitt aufweist, wobei der erste Folien-abschnitt-Rand sich, vorzugsweise zwischen dem dritten Folien-Abschnitt-Rand und dem vierten Folienabschnitt-Rand, über eine erste Folienabschnitt-Rand-Länge erstreckt und mit einer ersten Folienabschnitt-Rand-Stirnfläche begrenzt ist, derart aus dem Folienabschnitt durch Wickeln desselben hergestellt ist, dass der erste Folien-End-Abschnitt und der zweite Folien-End-Abschnitt sich in der Umlaufrichtung in einem sich entlang der Folienhohlkörper-Zentralachse erstreckenden Überlappungsabschnitt überlappen, so dass der erste Folienabschnitt-Rand innenliegend angeordnet ist und der zweite Folienabschnitt-Rand außenliegend angeordnet ist, derart in den Werkzeugform-Hohlraum der wenigstens einen ersten Werkzeugform des sich in seiner Werkzeug-Öffnungsstellung befindlichen Spritzgießwerkzeugs überführt bzw. eingelegt wird, dass seine, vorzugsweise bedruckte, Folien-Wickelkörper-Außenfläche einer die wenigstens eine Werkzeugform-Hohlraum-Wölbung aufweisende Werkzeugform-Hohlraum-Mantelfläche unmittelbar gegenüber liegt, vorzugsweise und an der Werkzeugform-Hohlraum-Mantelfläche anliegt, insbesondere und dort anliegend fixiert wird, beispielsweise durch Anwendung von Vakuum oder durch elektrostatische Kräfte, wobei in einem, vorzugsweise nachfolgenden, zweiten Verfahrensschritt das Spritzgießwerkzeug von seiner Werkzeug-Öffnungsstellung in seine Werkzeug-Schließstellung überführt wird, in welcher die fließfähige, verfestigbare Masse, vorzugsweise bei erhöhtem Druck und bei erhöhter Temperatur, in den Werkzeug-Hohlraum des geschlossenen Spritzgießwerkzeugs gespritzt und die Folien-Wickelkörper-Innenfläche des bereits in dem Werkzeug-Hohlraum angeordneten Folien-Wickelkörpers mit der fließfähigen, verfestigbaren Masse, vorzugsweise bei erhöhtem Druck und bei erhöhter Temperatur, hinterspritzt wird, wobei oder so dass eine Fließfront der fließfähigen, verfestigbaren Masse in unmittelbarem Kontakt mit der Folien-Wickelkörper-Innenfläche in einer Haupt-Fließrichtung entlang der Folien-Wickelkörper-Innenfläche fließt, vorzugsweise wobei die Haupt-Fließrichtung parallel zu einer gedachten Schnittlinie der die Werkzeug-Hohlraum-Zentralachse enthaltenden, gedachten Ebene mit der Folien-Wickelkörper-Innenfläche ausgebildet ist, wobei die fließfähige, verfestigbare Masse zumindest so lange in den Werkzeug-Hohlraum des geschlossenen Spritzgießwerkzeugs gespritzt, vorzugsweise und unter Nachdruck gehalten wird, bis der den Folien-Wickelkörper enthaltende Werkzeug-Hohlraum auch mit der Masse ausgefüllt ist, wobei und/oder wonach im Zuge eines Verfestigens, insbesondere Aushärtens der Masse in dem Werkzeug-Hohlraum des weiterhin geschlossenen Spritzgießwerkzeugs der Verbundkörper ausgebildet wird, wobei in einem, vorzugsweise nachfolgenden, dritten Verfahrensschritt das Spritzgießwerkzeug von seiner Werkzeug-Schließstellung in seine Werkzeug-Öffnungsstellung überführt wird, wobei oder wonach der separat handhabbare, insbesondere eigensteife, Verbundkörper aus dem Spritzgießwerkzeug entnehmbar ist oder entnommen wird, wobei erfindungsgemäß der Folien-Wickelkörper derart ausgebildet ist und derart in den Werkzeugform-Hohlraum der wenigstens einen ersten Werkzeugform des geöffneten Spritzgießwerkzeugs, vorzugsweise bis zu einer zumindest teilweisen Anlage an der Werkzeugform-Hohlraum-Mantelfläche, überführt bzw. eingelegt wird, dass nach dem Schließen des Spritzgießwerkzeugs während des Hinterspritzens der Folien-Wickelkörper-Innenfläche mit der fließfähigen, verfestigbaren Masse, der innenliegende, erste Folienabschnitt-Rand des den zweiten Folien-Endabschnitt innenseitig überlappenden ersten Folien-End-Abschnitts, vorzugsweise im Wesentlichen, über seine gesamte, erste Folienabschnitt-Rand-Länge, insbesondere durchgehend, also im Wesentlichen an jeder Stelle entlang des innenliegenden, ersten Folienabschnitt-Rands, gegebenenfalls mit Ausnahme eines mit dem ersten Folienabschnitt-Rand begrenzten Folienabschnitt-Rand-Eckbereichs des ersten Folien-End-Abschnitts oder gegebenenfalls mit Ausnahme von mit dem ersten Folienabschnitt-Rand begrenzten Folienabschnitt-Rand-Eckbereichen des ersten Folien-End-Abschnitts, schräg zu der Haupt-Fließrichtung der an der Folien-Wickelkörper-Innenfläche entlang flie-ßenden Fließfront der fließfähigen, verfestigbaren Masse angeordnet ist, wobei die erste Folienabschnitt-Rand-Stirnfläche des ersten Folienabschnitt-Rands, vorzugsweise im Wesentlichen, gegebenenfalls mit Ausnahme eines bzw. des mit dem ersten Folienabschnitt-Rand begrenzten Folienabschnitt-Rand-Eckbereichs des ersten Folien-End-Abschnitts oder gegebenenfalls mit Ausnahme von bzw. den mit dem ersten Folienabschnitt-Rand begrenzten Folienabschnitt-Rand-Eckbereichen des ersten Folien-End-Abschnitts, nicht in eine Richtung entgegen der Haupt-Fließrichtung der entlang der Folien-Wickelkörper-Innenfläche fließenden Fließfront der Masse weist.

Durch die schräge Auslegung wird die Strecke des Überganges der Schmelze verkürzt und die fließfähige, verfestigbare Masse presst an ihrer in der Haupt-Fließrichtung fließenden Fließfront den innenliegenden, ersten Folien-Endabschnitt im Überlappungsbereich gegen den außenliegenden, zweiten Folien-End-abschnitt und zeitgleich presst die Masse auch die nicht überlappenden Bereiche des Folien-Wickelkörpers an die äußere Werkzeug-Hohlraum-Mantelfläche des geschlossenen Spritzgießwerkzeugs, ohne hinter die Folien-Wickelkörper-Wand an die Verbundkörper-Mantel-Außenfläche des Etiketts gelangen zu können. Im Prinzip kann man sich die Wirkung der in unendlich vielen Fließlinien zerlegten Fließfront mit paralleler Fließrichtung ähnlich wie ein Reißverschluss vorstellen. Beim Übergang der Masse über den schrägen Innen-Stoß, wird in Richtung des Fließendes Stück für Stück die Folien-Wickelkörper-Wand an die äußere Werk-zeug-Hohlraum-Mantelfläche des geschlossenen Spritzgießwerkzeugs gepresst und der Stoß wird faltenfrei durch die Masse fixiert. Dadurch kommt es nicht mehr zum Einschluss von Falten in die Masse und der fertige Verbundkörper weist keinerlei optische und sonstige Beeinträchtigungen in Bezug auf Falten und Hinterspritzungen auf.

Als Werkstoff für den Folienabschnitt und folglich für den daraus hergestellten Folien-Wickel-Körper und damit für das daraus gebildete Etikett kann bevorzugt ein thermoplastischer Kunststoff, insbesondere Polypropylen (PP) verwendet werden.

Bei der fließfähigen, verfestigbaren Masse kann es sich bevorzugt um eine Schmelze aus einem thermoplastischen Kunststoff, insbesondere aus Polypropylen, handeln. Die Schmelze aus dem thermoplastischen Kunststoff kann bevorzugt mit Hilfe einer Spritzeinheit einer Spritzgießmaschine hergestellt werden. Kernstück der Spritzeinheit ist eine Schneckenwelle, die auch Schnecke genannt wird, die in einem Zylinder angeordnet ist, der auch Schneckenzylinder oder Plastifizierzylinder genannt wird. Der Innendurchmesser des Zylinders entspricht dem Außendurchmesser der Schnecke. Im hinteren Bereich des Schneckenzylinders befindet sich entweder ein Trichter, in den ein rieselfähiges Rohmaterial, insbesondere Granulat oder Pulver, gefüllt wird, das aus einem thermoplastischen Kunststoff besteht oder einen thermoplastischen Kunststoff enthält, das also unter Wärmeeinwirkung schmelzbar ist. Ausgehend von dem Trichter kann das Rohmaterial, vorzugsweise schwerkraftbedingt, durch eine auch als Füllblock bezeichnete Öffnung in den Zylinder und in die Schneckengänge der Schnecke rieseln. Die Schnecke kann mittels eines Antriebs um ihre Drehachse gedreht werden. Dadurch kann die Schnecke im Schneckenzylinder rotieren und das Rohmaterial vorwärts transportieren.

Beim Thermoplast-Spritzgießen wird der Schneckenzylinder mittels elektrischer Heizbänder von außen erwärmt. Durch die spezielle Geometrie der Schnecke wird das Rohmaterial nicht nur gefördert, sondern auch geschert. Das thermoplastische Rohmaterial wird durch die Erwärmung und auch durch die Scherung plastifiziert und homogenisiert. An der Spitze der Schnecke befindet sich üblicherweise eine Rückströmsperre. An der Spitze des Zylinders befindet sich eine Düse, die den Übergang zum Spritzgießwerkzeug bildet. Bei dem Einspritzvorgang wird die Schnecke axial zu der Düse hingedrückt. Dabei schließt sich die Rückstromsperre und das Massevolumen der plastifizierten und homogenisierten thermoplastischen Schmelze wird durch die Düse in den Werkzeug-Hohlraum des geschlossenen Spritzgießwerkzeugs gespritzt. Nach der volumetrischen Füllung des Werkzeugs wird auf den Nachdruck umgeschaltet. Dabei muss im Zylinder Masse verbleiben (Restmassepolster), da sonst der Druck nicht auf die Masse wirken kann. Der Nachdruck wird benötigt, um den Volumenschwund auszugleichen. Die Thermoplastische Schmelze härtet in dem Werkzeug-Hohlraum des, vorzugsweise kühlbaren, geschlossenen Spritzgießwerkzeugs aus. Anschließend kann das fertige Bauteil aus dem geöffneten Spritzgießwerkzeug entnommen werden. Alternativ kann es sich bei der fließfähigen, verfestigbaren Masse um ein Gemisch aus einer speziellen Flüssigkeit oder aus einem speziellen, fließfähigen Binder und Papierteilen handeln. Dieses Gemisch kann vorzugsweise durch Einwirkung von Wärme verfestigt werden.

Gemäß einer vorteilhaften Ausführungsvariante kann vorgesehen sein, dass sich bei dem in den Werkzeug-Hohlraum überführten bzw. eingelegten Folien-Wickel-körper in einem Zeitraum, spätestens beginnend ab dem Einspritzen der fließfähigen, verfestigbaren Masse in den Werkzeug-Hohlraum des geschlossenen Spritzgießwerkzeugs bis zur Ausbildung des fertigen Verbundkörpers in dem Werkzeug-Hohlraum, der mit dem innenliegenden, ersten Folienabschnitt-Rand begrenzte, erste Folien-Endabschnitt und der mit dem außenliegenden, zweiten Folienabschnitt-Rand begrenzte, zweite Folien-Endabschnitt sich in dem Überlappungsabschnitt in der Umlaufrichtung um mindestens 0,2 mm und maximal 4 mm überlappen. Dadurch kann zum einen erreicht werden, dass es zu keinen Hinterfließungen von Masseteilen der Masse an die Verbundkörper-Mantel-außenfläche des Etiketts kommen kann und dass es zum anderen zu keinen Ablösungen im Bereich des Überlappungsabschnitt kommt.

Gemäß einer bevorzugten Ausführungsvariante kann vorgesehen sein, dass der innenliegende, erste Folienabschnitt-Rand des aus dem Folien-Wickelkörper gebildeten Etiketts derart ausgebildet wird bzw. ist, dass bei seiner Projektion in eine die Verbundkörper-Zentralachse enthaltende, erste Ebene eine gerade, erste Projektionslinie ausgebildet ist. Dabei kann vorgesehen sein, dass die gerade, erste Projektionslinie mit der Verbundkörper-Zentralachse einen spitzen, ersten Winkel einschließt. Der erste Winkel kann bevorzugt ein Winkelmaß zwischen 2 Grad und 15 Grad aufweisen. Vorzugsweise zusätzlich kann der außenliegende, zweite Folienabschnitt-Rand des aus dem Folien-Wickelkörper gebildeten Etiketts derart ausgebildet werden bzw. sein, dass bei seiner Projektion in eine die Verbundkörper-Zentralachse enthaltende, zweite Ebene eine gerade, zweite Projektionslinie ausgebildet ist. Dabei kann vorgesehen sein, dass die gerade, zweite Projektionslinie mit der Verbundkörper-Zentralachse einen spitzen, zweiten Winkel einschließt. Der zweite Winkel kann bevorzugt ein Winkelmaß zwischen 2 Grad und 15 Grad aufweisen. Durch diese Maßnahmen kann der optische Gesamteindruck noch weiter verbessert werden, insbesondere bei einem transparenten bzw. durchsichtigen Verbundkörper, insbesondere Verbund-Hohlkörper.

Gemäß einer vorteilhaften Ausführungsvariante kann vorgesehen sein, dass der außenliegende, zweite Folienabschnitt-Rand des Folien-Wickelkörpers und der innenliegende, erste Folienabschnitt-Rand des Folien-Wickelkörpers in der Umlaufrichtung einen Überlappungs-Abstand zueinander aufweisen, der einer Überlappungsbreite des Überlappungsabschnitts entspricht, die wenigstens 0,2 mm und maximal 4 mm aufweist. Auch dadurch kann zum einen erreicht werden, dass es zu keinen Hinterfließungen bzw. Hinterspritzungen von Masseteilen der Masse an die Verbundkörper-Mantelaußenfläche des Etiketts kommen kann und dass es zum anderen zu keinen Ablösungen im Bereich des Überlappungsab-schnitts kommt.

Es versteht sich, dass die vorstehenden Maßnahmen im Rahmen der Ausführbarkeit beliebig kombinierbar sind.

Weitere Vorteile, Merkmale und Gesichtspunkte der Erfindung ergeben sich aus den Ansprüchen und aus dem nachfolgenden Beschreibungsteil, in dem ein bevorzugtes Ausführungsbeispiel des Verfahrens beschrieben wird.

Es zeigen:
- Figur 1: eine geöffnetes Spritzgießwerkzeugs in einer Querschitts-Darstellung;
- Figur 2: einen aus einem 2D-Folienabschnitt gemäß Figur 4 gewickelten 3D-Folien-Wickelkörper in einer Seitenansicht;
- Figur 3: einen Querschnitt des 3D-Folien-Wickelkörpers entlang der Schnittlinien 3 - 3 in Figur 2, wobei die Folien-Wickelkörper-Wandstärke und die Überlappungsbreite der sich überlappenden Folien-Endabschnitte des Folien-Wickelkörpers aus Darstellungsgründen stark vergrößert gezeichnet ist;
- Figur 4: einen 2D-Folienabschnitt als Abwicklung des daraus gebildeten 3D-Folien-Wickelkörpers;
- Figur 5: einen Querschnitts-Ausschnitt des geschlossenen Spritzgießwerkzeugs, wobei der in den Werkzeugform-Hohlraum eingelegte Folien-Wickelkörper mit einer thermoplastischen Schmelze hinterspritzt ist;
- Figur 6: eine schematische Darstellung eines Ausschnitts der Folien-Wickelkörper-Wand des in dem Werkzeug-Hohlraum des geschlossenen Spritzgießwerkzeugs befindlichen Folien-Wickelkörpers, in einer Ansicht von innen nach außen, im Stoßbereich bzw. im Überlappungsbereich, zur Veranschaulichung der beim Einspritzen der Masse im Bereich ihrer in der Hauptfließrichtung fließenden Fließfront auftretenden Wirkungen;
- Figur 7: eine Seitenansicht des teilweise aufgebrochen dargestellten fertigen Verbund-Hohlkörpers;
- Figur 8: einen Querschnitt des Verbund-Hohlkörpers entlang der Schnittlinien 8 - 8 in Figur 7;
- Figur 9: einen stark vergrößerten Ausschnitt des Querschnitts gemäß Figur 8 innerhalb des dort eingezeichneten Kreises im Überlappungsbereich der sich überlappenden Endabschnitte des Etiketts.

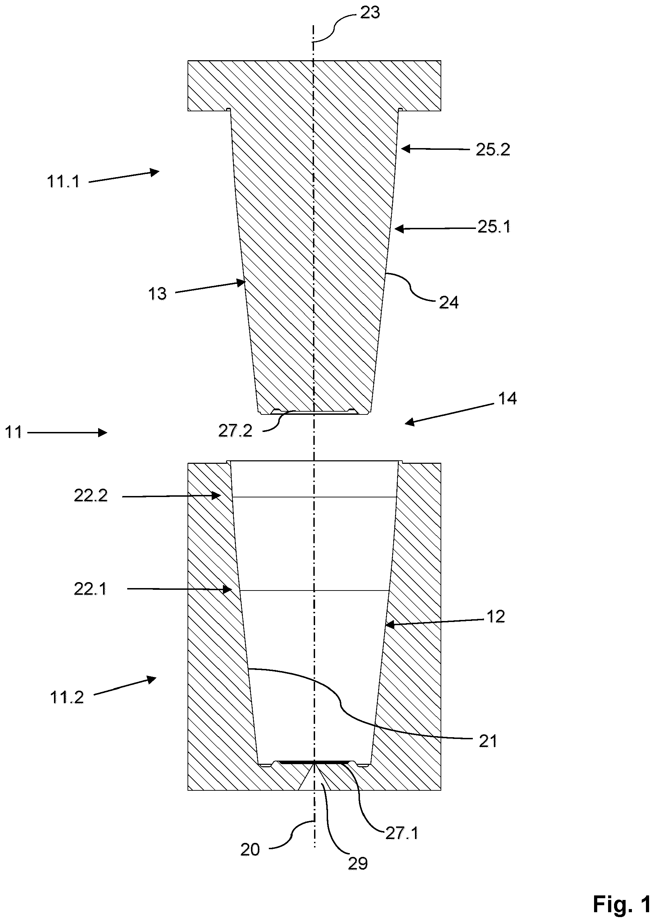

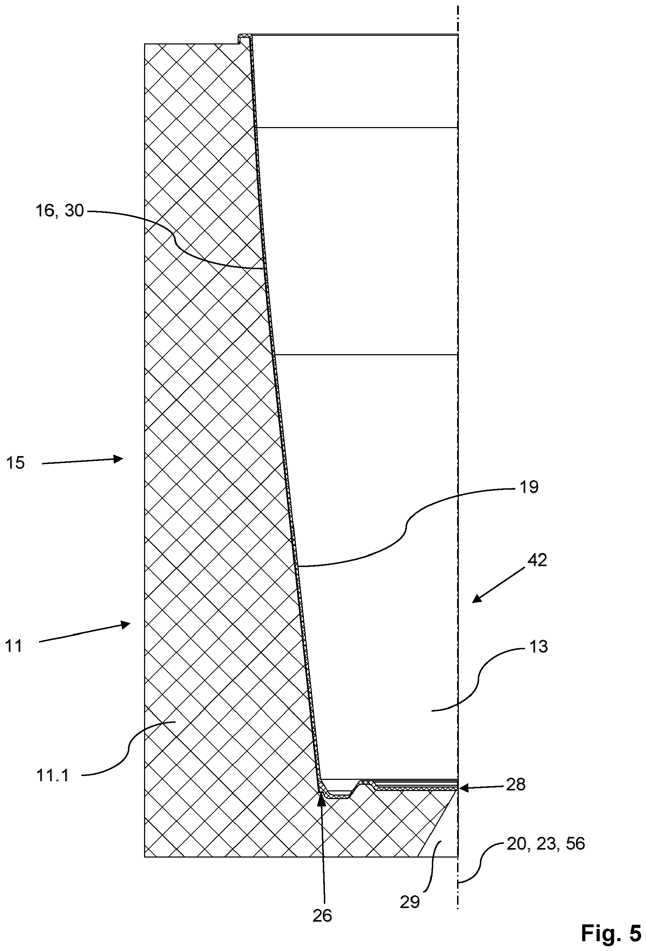

Das in Figur 1 in einer Öffnungsstellung gezeigte Spritzgießwerkzeug 11 zur Herstellung des in den Figuren bis 9 gezeigten Verbundkörpers 10 umfasst zwei Werkzeugformen 11.1, 11.2, und zwar eine erste Werkzeugform 11.1 in Form einer Matrize und eine zweite Werkzeugform 11.2 in Form einer Patrize. Die Matrize 11.1 umfasst einen Werkzeugform-Hohlraum 12. Die Patrize 11.2 umfasst einen Werkzeugkern 13. Die Matrize 11.1 und die Patrize 11.2 sind von der gezeigten Werkzeug-Öffnungsstellung 14 relativ zueinander eine in Figur 5 gezeigte Werkzeug-Schließstellung 15 überführbar, und umgekehrt. In der Werkzeug-Schließstellung 15 liegen die Matrize 11.1 und die Patrize 11.2 unter Einschließen eines den Werkzeugform-Hohlraum 12 der Matrize 11.1 enthaltenden Werkzeug-Hohlraums 12 aneinander an. Der Werkzeug-Hohlraum 12 des geschlossenen Spritzgießwerkzeugs 11 dient zur Aufnahme eines zur Ausbildung eines Etiketts 16 bestimmten Folien-Wickelkörpers 30 und zur Aufnahme einer zur Ausbildung eines Etikett-Träger-Wandteils 18 bestimmten, fließfähigen, verfestigbaren Masse 19.

Der Werkzeugform-Hohlraum 12 der Matrize 11.1 ist im Wesentlichen rotationssymmetrisch zu einer Werkzeugform-Hohlraum-Zentralachse 20 gestaltet. Demgemäß weist der Werkzeugform-Hohlraum 12 an beliebigen Stellen entlang der Werkzeugform-Hohlraum-Zentralachse 20, jeweils in einer senkrecht zu der Werkzeugform-Hohlraum-Zentralachse 20 ausgebildeten, gedachten Schnittebene, jeweils im Wesentlichen einen Kreisquerschnitt auf.

Es versteht sich, dass der Werkzeugform-Hohlraum entlang der Werkzeugform-Hohlraum-Zentralachse, jeweils in einer senkrecht zu der der Werkzeugform-Hohlraum-Zentralachse ausgebildeten, gedachten Schnittebene, jeweils auch andere Querschnitte aufweisen kann, beispielsweise einen elliptischen Querschnitt, einen ovalen Querschnitt oder einen eckigen Querschnitt.

Der Werkzeugform-Hohlraum 12 weist eine um die Werkzeugform-Hohlraum-Zentralachse 20 umlaufende, äußere Werkzeugform-Hohlraum-Mantelfläche 21 auf, die sich entlang der Werkzeugform-Hohlraum-Zentralachse 20 erstreckt. Die äußere Werkzeugform-Hohlraum-Mantelfläche 21 entspricht in dem gezeigten Ausführungsbeispiel einer äußeren Werkzeug-Hohlraum-Mantelfläche des Werkzeug-Hohlraums 12 des geschlossenen Spritzgießwerkzeugs 11. Die äußere Werkzeugform-Hohlraum-Mantelfläche 21 des Werkzeugform-Hohlraums 12 der Matrize 11.1 weist wenigstens eine sich entlang der Werkzeugform-Hohlraum-Zentralachse 20 erstreckende, um die Werkzeugform-Hohlraum-Zentralachse 20 umlaufende, äußere Werkzeugform-Hohlraum-Wölbung 22.1, 22.2 auf. Diese ist im Ausführungsbeispiel konkav gestaltet. Demgemäß weist auch die äußere Werkzeug-Hohlraum-Mantelfläche 21 des Werkzeug-Hohlraums 12 des geschlossenen Spritzgießwerkzeugs 11 wenigstens eine sich entlang seiner Werkzeug-Hohlraum-Zentralachse 20 erstreckende, um die Werkzeug-Hohlraum-Zentralachse 20 umlaufende, äußere Werkzeug-Hohlraum-Wölbung 22.1, 22.1 auf. Letztere entspricht also der Werkzeugform-Hohlraum-Wölbung. Sie ist also konkav gestaltet.

Es versteht sich, dass die äußere Werkzeugform-Hohlraum-Wölbung bzw. Werkzeug-Hohlraum-Wölbung auch anders gestaltet sein kann, beispielsweise konvex. Im Falle mehrerer unterschiedlicher, äußerer Werkzeugform-Hohlraum-Wölbungen bzw. Werkzeug-Hohlraum-Wölbungen entlang der Werkzeugform-Hohlraum-Zentralachse bzw. Werkzeug-Hohlraum-Zentralachse, können diese als eine Kombination von äußeren Werkzeugform-Hohlraum-Wölbungen bzw. Werkzeug-Hohlraum-Wölbungen mit gleichgerichteten Krümmungen und/oder als eine Kombination von Werkzeugform-Hohlraum-Wölbungen bzw. Werkzeug-Hohlraum-Wölbungen mit unterschiedlich gerichteten Krümmungen gestaltet sein, so dass beispielsweise entlang der Werkzeugform-Hohlraum-Zentralachse bzw. Werkzeug-Hohlraum-Zentralachse auf eine äußere, konvexe Werkzeugform-Hohlraum-Wölbung bzw. Werkzeug-Hohlraum-Wölbung eine äußere, konkave Werkzeugform-Hohlraum-Wölbung bzw. Werkzeug-Hohlraum-Wölbung folgen kann. In dem zuletzt genannten Fall könnte sich entlang der Werkzeugform-Hohlraum-Zentralachse bzw. Werkzeug-Hohlraum-Zentralachse betrachtet ein S-förmiger Wölbungsverlauf ergeben.

Der Werkzeugkern 13 der Patrize 11.2 ist im Wesentlichen rotationssymmetrisch zu einer Werkzeugkern-Zentralachse 23 gestaltet. Demgemäß weist der Werkzeugkern 13 an beliebigen Stellen entlang der Werkzeugkern-Zentralachse 23, jeweils in einer senkrecht zu der der Werkzeugkern-Zentralachse 23 ausgebildeten, gedachten Schnittebene, jeweils im Wesentlichen einen Kreisquerschnitt auf.

Es versteht sich, dass der Werkzeugkern entlang der Werkzeugkern-Zentralachse, jeweils in einer senkrecht zu der der Werkzeugkern-Zentralachse ausgebildeten, gedachten Schnittebene, jeweils auch andere Querschnitte aufweisen kann, beispielsweise einen elliptischen Querschnitt, einen ovalen Querschnitt oder einen eckigen Querschnitt.

Der Werkzeugkern 13 weist eine um die Werkzeugkern-Zentralachse 23 umlaufende, Werkzeugkern-Mantelfläche 24 auf, die sich entlang der Werkzeugkern-Zentralachse 23 erstreckt. Die Werkzeugkern-Mantelfläche 24 entspricht in dem gezeigten Ausführungsbeispiel einer inneren Werkzeug-Hohlraum-Mantelfläche des Werkzeug-Hohlraums 12 des geschlossenen Spritzgießwerkzeugs 11. Die Werkezugkern-Mantelfläche, also die innere Werkzeug-Hohlraum-Mantelfläche 24 des Werkzeugkerns 13 der Patrize 11.2 weist wenigstens eine sich entlang der Werkzeugkern-Zentralachse 23 erstreckende, um die Werkzeugkern-Zentralachse 23 umlaufende Werkzeugkern-Wölbung 25.1, 25.2 auf. Diese ist im Ausführungsbeispiel konvex gestaltet. Demgemäß weist auch die innere Werkzeug-Hohlraum-Mantelfläche 24 des Werkzeug-Hohlraums 12 des geschlossenen Spritzgießwerkzeugs 11 wenigstens eine sich entlang der mit der Werkzeugkern-Zentralachse 23 zusammenfallenden Werkzeug-Hohlraum-Zentralachse 20 erstreckende, um die Werkzeug-Hohlraum-Zentralachse 20 umlaufende, innere Werkzeug-Hohlraum-Wölbung 25.1, 25.2 auf, die der Werkzeugform-Hohlraum-Wölbung der Matrize 11.1 entspricht. Sie ist also ebenfalls konvex gestaltet.

Es versteht sich, dass die innere Werkzeug-Hohlraum-Wölbung auch anders gestaltet sein kann, beispielsweise konvex. Im Falle von mehreren, unterschiedlichen, inneren Werkzeug-Hohlraum-Wölbungen entlang der Werkzeug-Hohlraum-Zentralachse, können diese als eine Kombination von inneren Werkzeug-Hohlraum-Wölbungen mit gleichgerichteten Krümmungen und/oder als eine Kombination von inneren Werkzeug-Hohlraum-Wölbungen mit unterschiedlich gerichteten Krümmungen gestaltet sein, so dass beispielsweise entlang der Werkzeug-Hohlraum-Zentralachse auf eine innere, konvexe Werkzeug-Hohlraum-Wölbung eine innere, konkave Werkzeug-Hohlraum-Wölbung folgen kann. In dem zuletzt genannten Fall könnte sich entlang der Verbund-Hohlkörper-Zentralachse betrachtet ein S-förmiger Wölbungsverlauf ergeben.

Der Werkzeugkern 13 der Patrize 11.2 und der Werkzeugform-Hohlraum 12 der Matrize 11.1 sind derart aufeinander abgestimmt gestaltet, dass der Werkzeugkern 13 in dem Werkzeugform-Hohlraum 12 der Matrize 11.1 aufnehmbar ist, wenn die Patrize 11.2 und die Matrize 11.1 aufeinander zu bewegt werden, bis sie in der Werkzeug-Schließstellung 15 aneinander anliegen (vgl. Figur 5). Dabei sind die Matrize 11.1 und die Patrize 11.2 derart aufeinander ausgerichtet geführt, dass die Werkzeugform-Hohlraum-Zentralachse 20 der Matrize 11.1 und die Werkzeugkern-Zentralachse 23 des Werkzeugkerns 13 miteinander fluchten. Wenn sich das Spritzgießwerkzeug 11 in seiner Werkzeug-Schließstellung 15 befindet, ist zwischen der Werkzeugkern-Mantelfläche 24 des Werkzeugkerns 13 der Patrize 11.2 und der äußeren Werkzeugform-Mantelfläche 21 des Werkzeugform-Hohlraums 12 der Matrize 11.1 ein Ringspalt bzw. Ringraum 26 ausgebildet. Der Ringraum 26 läuft um die Werkzeug-Hohlraum-Zentralachse 20 um, welche sowohl mit der Werkzeugform-Hohlraum-Zentralachse als auch mit der Werkzeugkern-Zentralachse 23 zusammenfällt. Der Ringraum 26 bildet einen Hohlraum-Teil des Werkzeug-Hohlraums 12 des geschlossenen Spritzgießwerkzeugs 11. Der Ringraum 26 ist radial nach außen von der äußeren Werkzeug-Hohlraum-Mantelfläche bzw. von der äußeren Werkzeugform-Hohlraum-Mantelfläche 21 des Werkzeugform-Hohlraums 12 der Matrize 11.1 begrenzt. Radial nach innen ist der Ringraum 26 von der mit der Werkzeugkern-Mantelfläche 24 des Werkzeugkerns 13 gebildeten, inneren Werkzeug-Hohlraum-Mantelfläche 24 begrenzt.

Der Werkzeug-Hohlraum 12 des geschlossenen Spritzgießwerkzeugs 11 ist auch durch zwei Basis-Flächen 27.1, 27.2 begrenzt, und zwar von einer ringförmigen ersten Basisfläche 27.1 der Matrize 11.1 und von einer gegenüber liegend angeordneten, durchgehenden, zweiten Basisfläche 27.2 des Werkzeugkerns 13. Die erste Basisfläche 27.1 und die zweite Basisfläche 27.2 erstrecken sich senkrecht zu der Werkzeug-Hohlraum-Zentralachse 20 in einem Basisflächen-Abstand parallel zueinander. Dadurch wird ein Basis-Hohlraum 28 des Werkzeug-Hohlraums 12 des geschlossenen Spritzgießwerkzeugs 11 geschaffen. Der Basis-Hohlraum 28 geht im Bereich der Werkzeug-Hohlraum-Zentralachse 20 in der Richtung von dem Werkzeugkern 13 weg in eine auch als Anguss bezeichnete Zentralöffnung 29 über, über welche die fließfähige, verfestigbare Masse 19 in den Werkzeug-Hohlraum 12 des geschlossenen Spritzgießwerkzeugs 11 einspritzbar ist.

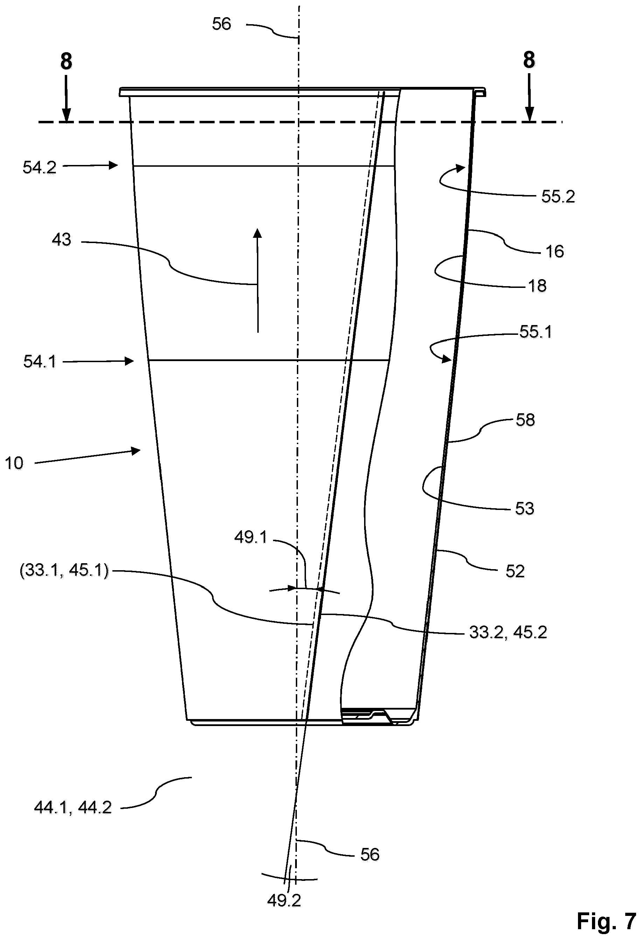

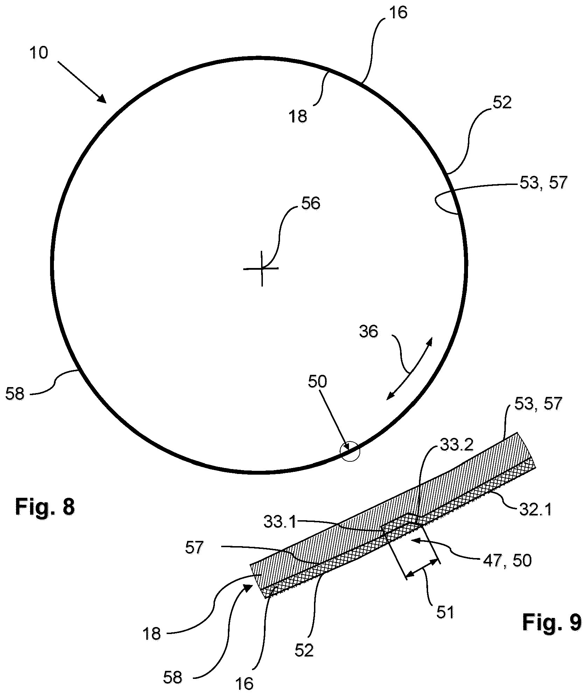

Mittels des Spritzgießwerkzeugs 11 ist ein erfindungsgemäßer Verbundkörper 10 herstellbar. Dabei handelt es sich in dem gezeigten Ausführungsbeispiel um einen Verbund-Hohlkörper. Der Verbund-Hohlkörper 10 weist die Form eines Bechers auf (siehe Figuren 7 und 8).

Zur Herstellung des Verbund-Hohlkörpers 10 kann wie folgt vorgegangen werden: Es wird entweder von einem rohrförmigen, kegelförmigen Folien-Wickelkörper 30 ausgegangen oder wird zunächst ein kegelförmiger Wickelkörper 30 hergestellt.

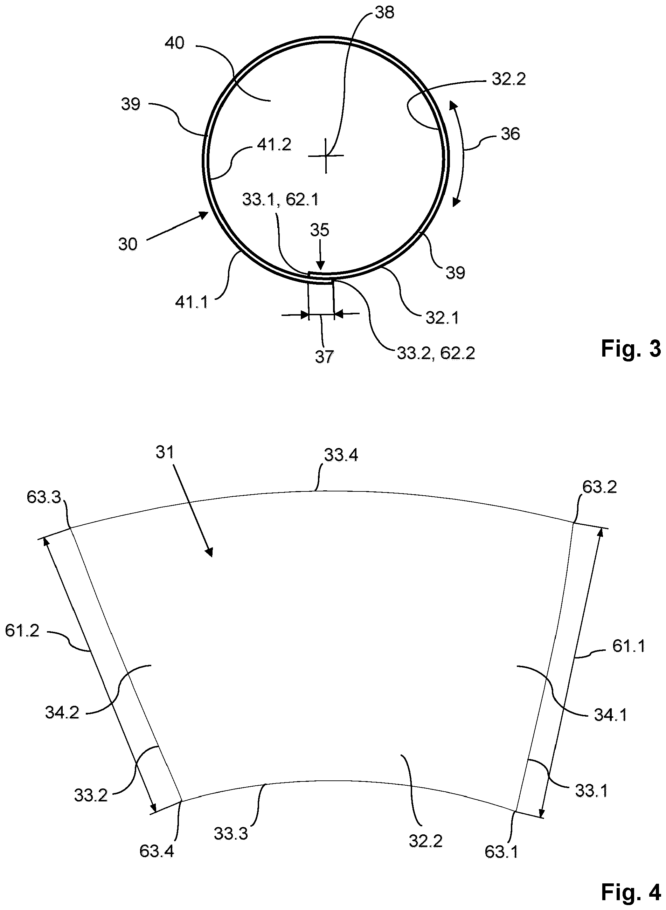

Zur Herstellung des kegelförmigen Folien-Wickelkörpers 30 wird von einem biegsamen und wickelbaren Folienabschnitt 31 ausgegangen. Der Folienabschnitt 31 ist in seiner Abwicklung in der Figur 4 gezeigt. Der Folienabschnitt 31 weist eine bedruckte, erste Folienfläche 32.1 und eine von dieser, in eine entgegengesetzte Richtung wegweisende, sich parallel zu der bedruckten, ersten Folienfläche 32.1 erstreckende, zweite Folienfläche 32.2 auf. Der Folienabschnitt 31 ist mit einem ersten Folienabschnitt-Rand 33.1, einem zweiten Folienabschnitt-Rand 33.2, einem dritten Folienabschnitt-Rand 33.3 und einem vierten Folienabschnitt-Rand 33.4 begrenzt. Jeder dieser vier Folienabschnitt-Ränder 33.1, 33.2, 33.3, 33.4 erstreckt sich zwischen zwei Rand-Ecken 63.1, 63.2; 63.3, 63.4; 63.1, 63.4; 63.2, 63.3 des Folienabschnitts 31. Der Folienabschnitt 31 ist viereckig bzw. mit vier Rand-Ecken 63.1, 63.2, 63.3 63.4 ausgebildet. Jeder Folienabschnitt-Rand 33.1, 33.2, 33.3, 33.4 ist mit einer Folienabschnitt-Rand-Stirnfläche begrenzt. Jede Folien-Rand-Stirnfläche erstreckt sich über die jeweilige gesamte Folienabschnitt-Rand-Länge des jeweiligen Folienabschnitt-Rands 33.1, 33.2, 33.3, 33.4 ununterbrochen, stufenfrei und kantenfrei durchgehend. Der erste Folienabschnitt-Rand 33.1 erstreckt sich zwischen dem dritten Folien-Abschnitt-Rand 33.3 und dem vierten Folienabschnitt-Rand 33.4 über eine erste Folienabschnitt-Rand-Länge 61.1. Der weite Folienabschnitt-Rand 33.2 erstreckt sich zwischen dem dritten Folien-Abschnitt-Rand 33.3 und dem vierten Folienabschnitt-Rand 33.4 über eine zweite Folienabschnitt-Rand-Länge 61.2. Der Folienabschnitt 31 weist einen ersten Folien-End-Abschnitt 34.1 auf, der durch den ersten Folienabschnitt-Rand 33.1 begrenzt ist. Der erste Folienabschnitt-Rand 33.1 ist mit einer ersten Folienabschnitt-Rand-Stirnfläche 62.1 begrenzt. Der Folienabschnitt 31 weist einen zweiten Folien-End-Abschnitt 34.2 auf, der durch den zweiten Folienabschnitt-Rand 33.2 begrenzt ist. Der zweite Folienabschnitt-Rand 33.2 ist mit einer zweiten Folienabschnitt-Rand-Stirnfläche 62.2 begrenzt. Die zweite Folien-abschnitt-Rand-Stirnfläche 62.2 und die erste Folienabschnitt-Rand-Stirnfläche 62.1 weisen voneinander weg. In dem gezeigten Ausführungsbeispiel sind sowohl der erste Folienabschnitt-Rand 33.1 als auch der zweite Folienabschnitt-Rand 33.2 in Teilbereichen konvex nach außen gekrümmt.

Der in Figur 4 in seiner Abwicklung gezeigte Folienabschnitt 31 wird zu einem kegelförmigen Folien-Wickelkörper 30 geformt bzw. gewickelt. Hierzu kann ein in den Figuren nicht gezeigter, kegeliger Einlegedorn verwendet werden, der um eine gedachte Einlegedorn-Zentralachse umlaufende Kegelmantelflächen aufweist, die sich entlang der Einlegedorn-Zentralachse erstrecken. Der Folienabschnitt 31 wird mit seiner bedruckten Folienseite nach außen auf die Kegelmantelfläche des Einlegedorns um dessen Einlegedorn-Zentralachse herumgewickelt. Der Einlegdorn ist derart gestaltet, dass bei dem Herumwickeln des Folienabschnitts 31 der erste Folien-End-Abschnitt 34.1 und der zweite Folien-End-Abschnitt 34.2 sich in einer Umlaufrichtung 36 um die Einlegedorn-Zentralachse in einem Überlappungsabschnitt 35 überlappen, so dass der erste Folienabschnitt-Rand 33.1 innenliegend angeordnet ist und der zweite Folienabschnitt-Rand 33.2 außenliegend angeordnet ist. Der Überlappungsabschnitt 35 weist in dem Querschnitt gemäß Figur 3 in der Umlaufrichtung 36 eine Überlappungsbreite 37 auf. Der mit dem zweiten, außenliegenden Folienabschnitt-Rand 33.2 begrenzte, außenliegende, zweite Folien-Endabschnitt überlappt den mit dem innenliegenden, ersten Folienabschnitt-Rand 33.1 begrenzten, innenliegenden, ersten Folien-End-Abschnitt in dem Überlappungsabschnitt 35. Entlang der gedachten Folien-Wickelkörper-Zentralachse 38 betrachtet, überlappen sich der erste Folien-End-abschnitt 34.1 und der zweite Folien-Endabschnitt jeweils durchgehend im Wesentlichen über die gesamte Längserstreckung bzw. jeweils im Wesentlichen über die gesamte Folienabschnitt-Rand-Länge 61.1, 61.2 ihrer Folienabschnitt-Ränder 33.1, 33.2. Der auf dem Einlegedorn gewickelte Folien-Wickelkörper 30 kann auf der Einlegedorn-Mantelfläche fixiert werden, beispielsweise unter Anwendung von Vakuum, wofür die Einlegedorn-Mantelfläche mit nach außen offenen Öffnungen versehen sein kann.

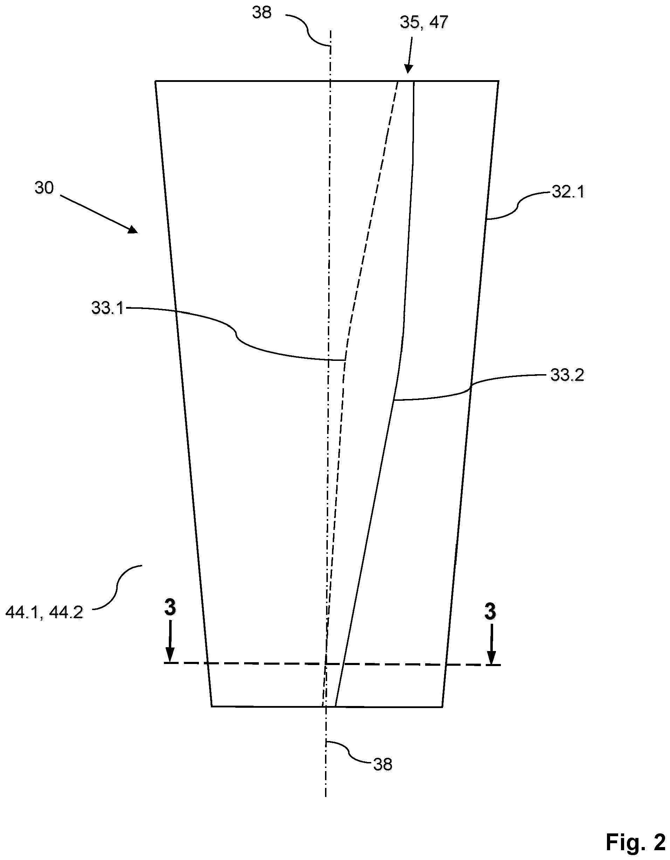

Auf diese Art und Weise wird also ein Folien-Wickelkörper 30 hergestellt, der eine um seine Folien-Wickelkörper-Zentralachse 38 in der Umlaufrichtung 36 umlaufende und sich entlang der Folien-Wickelkörper-Zentralachse 38 erstreckende Folien-Wickelkörper-Wand 39 aufweist. Die Folien-Wickelkörper-Wand 39 umschließt einen Folien-Wickelkörper-Innenraum 40 in Form eines Folien-Wickel-körper-Hohlraums des Folien-Wickelkörpers 30. Die Folien-Wickelkörper-Wand 39 weist eine außenseitig bedruckte Folien-Wickelkörper-Außenfläche 41.1 und eine von dieser wegweisende Folien-Wickelkörper-Innenfläche 41.2 auf. Die Folien-Wickelkörper-Innenfläche 41.2 begrenzt den Folien-Wickelkörper-Innenraum 40, also den Folien-Wickelkörper-Hohlraum. Der auf diese Art und Weise hergestellte Folien-Wickelkörper 30 ist - ohne den Einlegedorn - in den Figuren 2 und 3 gezeigt.

Nach dem Wickeln des kegeligen Folien-Wickelkörpers 30 auf dem Einlegdorn, wird Letzterer zusammen mit dem auf dessen Einlegedorn-Mantelfläche aufgewickelten Folien-Wickelkörper 30 in das offene Spritzgießwerkzeug 11 in den Werkzeugform-Hohlraum 12 der Matrize 11.1 bis in eine Einführstellung 42 überführt, in welcher der Folien-Wickelkörper 30 beispielsweise mit Hilfe eines Vakuumsystems oder mit Hilfe eines Systems zur elektrostatischen Aufladung des Folien-Wickelkörpers, das in den Einlegedorn integriert sein kann, an der äußeren Werkzeugform-Hohlraum-Mantelfläche 21 des Werkzeugform-Hohlraums 12 fixiert wird. Das Lösen des Folien-Wickelkörpers 30 von dem Einlegedorn kann durch Abblasen des Folien-Wickelkörpers 30 von dem Einlegedorn unterstützt werden.

Der Folien-Wickelkörper 30 wird derart in den Werkzeugform-Hohlraum 12 der Matrize 11.1 des geöffneten Spritzgießwerkzeugs 11 eingelegt, dass seine bedruckte Folien-Wickelkörper-Außenfläche 41.1 unmittelbar an der die wenigstens eine Werkzeugform-Hohlraum-Wölbung 22.1, 22.2 aufweisende Werkzeugform-Hohlraum-Mantelfläche 21 der Matrize 11.1 anliegt und dort anliegend, beispielsweise durch Anwendung von Vakuum oder durch elektrostatische Kräfte, fixiert wird, wobei bzw. so dass nach dem Schließen des Spritzgießwerkzeugs 11 während des Hinterspritzens der Folien-Wickelkörper-Innenfläche 41.2 des Folien-Wickelkörpers 30 mit der fließfähigen, verfestigbaren Masse 19, der innenliegende, erste Folienabschnitt-Rand 33.1 des den zweiten Folien-Endabschnitt 34.2 innenseitig überlappenden ersten Folien-End-Abschnitts 34.1 über seine gesamte, erste Folienabschnitt-Rand-Länge 61.1 durchgehend, also an jeder Stelle entlang des innenliegenden, ersten Folienabschnitt-Rands, schräg zu der Haupt-Fließrichtung 43 der an der Folien-Wickelkörper-Innenfläche 41.2 entlang fließenden Fließfront der Masse 40 angeordnet ist und die erste Folienabschnitt-Rand-Stirnfläche 62.1 des ersten Folienabschnitt-Rands 33.1 nicht in eine Richtung entgegen der Haupt-Fließrichtung 43 der entlang der Folien-Wickelkörper-Innenfläche 41.2 fließenden Fließfront der Masse 19 weist.

Bei dem in den Werkzeugform-Hohlraum 12 eingelegten Folien-Wickelkörper 30, der mit seiner bedruckten Folien-Wickelkörper-Außenfläche 41.1 unmittelbar an der die wenigstens eine Werkzeugform-Hohlraum-Wölbung 22.1, 22.2 aufweisende Werkzeugform-Hohlraum-Mantelfläche 21 anliegt, überlappen sich der mit dem innenliegenden, ersten Folienabschnitt-Rand 33.1 begrenzte, erste Folien-Endabschnitt 34.1 und der mit dem außenliegenden, zweiten Folienabschnitt-Rand 33.2 begrenzte, zweite Folien-Endabschnitt 34.2 in der Umfangsrichtung 36 in einem Überlappungsabschnitt 35 um wenigstens 0,2 mm, vorzugsweise um maximal 4 mm.

Nach dem Anlegen des Folien-Wickelkörpers 30 mit seiner Folien-Wickel-körper-Außenfläche 41.1 an der äußeren Werkzeugform-Hohlraum-Mantelfläche 21 der Matrize 11.1 wird der Einlegedorn zurückgezogen und aus dem offenen Spritzgießwerkzeug 11 entfernt. Gleichzeitig oder anschließend kann das Spritzgießwerkzeug 11 von seiner Werkzeug-Öffnungsstellung 14 in seine Werkzeug-Schließstellung 15 überführt werden, also geschlossen werden. Dabei wird der Werkzeugkern 13 der Patrize 12.2 in den Folien-Wickelkörper-Innenraum bzw. - Hohlraum 40 des an der äußeren Werkzeug-Hohlraum-Mantelfläche 21 des Werkzeug-Hohlraums 12 anliegenden Folien-Wickelkörpers 30 eingeschoben, bis er sich in der in der Figur 5 gezeigten Einführstellung 42 befindet.

Daran anschließend wird die Schmelze fließfähige, verfestigbare Masse 19, im Ausführungsbeispiel eine thermoplastische Schmelze aus Polypropylen, bei bzw. mit erhöhtem Druck und bei erhöhter Temperatur, beispielsweise bei einem Innen-Druck von 300 bar und bei einer Schmelze-Temperatur von 230 Grad Celsius, über den Anguss 29 in den Werkzeug-Hohlraum 12 des geschlossenen Spritzgießwerkzeugs 11 eingespritzt. Zu diesem Zwecke kann die Düse der in den Figuren nicht gezeigten Spritzgießmaschine im Bereich des Angusses 29 an die Matrize 11.1 des Spritzgießwerkzeugs 11 derart angedrückt werden, dass die in ihrem Schneckenzylinder plastifizierte Schmelze über die Düse und den Anguss 29 in den Werkzeug-Hohlraum 12 des geschlossenen Spritzgießwerkzeugs 11 eingespritzt werden kann.

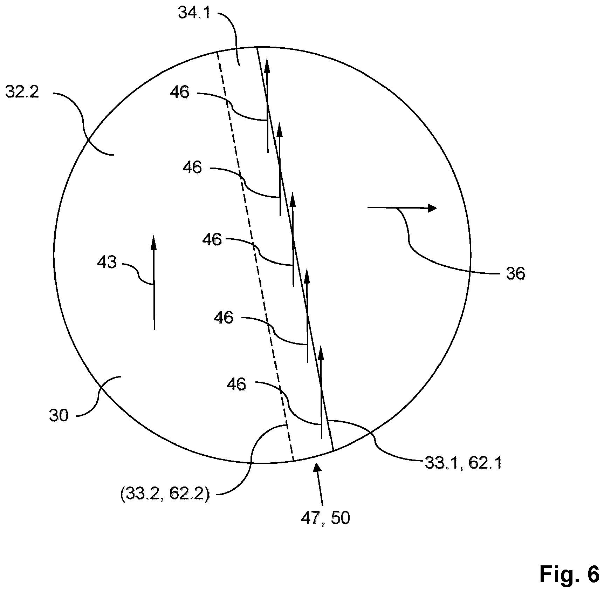

Das fortlaufende Einspritzen der Schmelze 19 in den Werkzeug-Hohlraum 12 des geschlossenen Spritzgießwerkzeugs 11 führt dazu, dass sich zunächst im Bereich der sich gegenüberliegenden Basisflächen 27.1, 27.2 eine sich über der Einspritzzeit kreisförmig erweiternde Schmelzfront ausbildet, die sich dann als eine kreisringförmige Schmelzfront in dem kreisringförmigen Hohlraum 26 zwischen der Folien-Wickelkörper-Innenfläche 41.2 des Folien-Wickelkörpers 30 und der gegenüber liegenden Werkzeugkern-Mantelfläche 24 des Werkzeugkerns 13 weiter in einer, vorzugsweise parallel zu einer gedachten Schnittlinie einer die Werkzeug-Hohlraum-Zentralachse 20 enthaltenden, gedachten Ebene mit der Folien-Wickelkörper-Innenfläche 41.2 ausgebildeten, Haupt-Fließrichtung 43 entlang der Werkzeug-Hohlkörper-Zentralachse 20 weiter bewegt. Dabei wird die Folien-Wickelkörper-Innenfläche 41.2 des das spätere Etikett 16 bildenden Folien-Wickelkörpers 30 mit der Schmelze 19, also bei erhöhter Temperatur, und bei noch immer hohem Einspritzdruck hinterspritzt. Im Zuge dessen ergibt sich der in Figur 6 schematisch gezeigte Fließfrontverlauf, der dort mit die Haupt-Fließrichtung 43 kennzeichnenden Fließrichtungs-Pfeilen 46 veranschaulicht ist. In Figur 6 ist der innenliegende, erste Folienabschnitt-Rand 33.1 des ersten Folien-End-Abschnitts 34.1 des Folien-Wickelkörpers 30 mit einer durchgehenden Linie eingezeichnet, während der außenliegende, hinter dem ersten Folien-End-Abschnitt 34.1 des Folien-Wickelkörpers 30 verborgen angeordnete, außenliegende, zweite Folienabschnitt-Rand 33.2 des zweiten Folien-End-Abschnitts 34.2 des Folien-Wickelkörpers 30 mit einer gestrichelten Linie eingezeichnet ist.

Durch die schräge Auslegung des innenliegenden, ersten Folienabschnitt-Rands 33.1 des ersten Folien-End-Abschnitts 34.1 des Folien-Wickelkörpers 30 wird die Strecke des Überganges der Schmelze 19 verkürzt und die von der Mitte bzw. vom Anguss 29 her durch den Basis-Hohlraum 28 fließende Schmelze 19 presst an ihrer in der Haupt-Fließrichtung 43 verlaufenden Fließfront den innenliegenden, ersten Folien-Endabschnitt 34.1 im Überlappungsbereich 35 gegen den außenliegenden, zweiten Folien-Endabschnitt 34.2 und zeitgleich presst die Schmelze 19 auch die nicht überlappenden Bereiche des Folien-Wickelkörpers 30 bzw. seiner Folien-Wickelkörper-Wand 39 an die Werkzeug-Hohlraum-Mantelfläche 21 des geschlossenen Spritzgießwerkzeugs 11, ohne hinter die Folien-Wickelkörper-Wand 39 an die außenseitig bedruckte Folien-Wickelkörper-Außenfläche 41.1 des Folien-Wickelkörpers 30 und folglich ohne an die Verbundkörper-Mantel-Außenfläche 52 des Etiketts 16 gelangen zu können. Die Schmelze 19 fließt also während des Hinterspritzens des Folien-Wickelköpers 30 über den innenliegenden, ersten Folienabschnitt-Rand 33.1 des den zweiten Folien-Endabschnitt 34.2 überlappenden ersten Folien-Endabschnitts 34.1 und fließt von dort in der Hauptfließrichtung 43 entsprechend der Fließrichtungspfeile 46 in Figur 6 weiter gegen den nicht überlappenden Bereich der Folien-Wickel-körper-Innenfläche 41.2 des Folien-Wickelkörpers, bis der Hohlraum 26 bzw. die Kavität mit der Schmelze 19 gefüllt ist, also das Füllende erreicht ist.

Im Prinzip kann man sich die in unendlich viele Fließlinien zerlegte Fließfront mit paralleler Fließrichtung 43 vorstellen wie ein Reißverschluss. Beim Übergang der Schmelze 19 über den schrägen, innenliegende, erste Folienabschnitt-Rand 31.1 des ersten Folien-End-Abschnitts 34.1 des Folien-Wickelkörpers 30 wird in Richtung des Fließ-Endes Stück für Stück die Folien-Wickelkörper-Wand 39 an die äußere Werkzeug-Hohlraum-Mantelfläche 21 des geschlossenen Spritzgießwerkzeugs 11 gepresst und auch der Stoß 47 wird faltenfrei durch die Masse 19 fixiert.. Dadurch kommt es nicht mehr zum Einschluss von Falten in die Masse 19 und nicht mehr zu Hinterfließungen bzw. Hinterspritzungen auf der Außenseite des Etiketts 16, so dass der fertige Verbundkörper 10 keinerlei optische und sonstige Beeinträchtigungen in Bezug auf Falten und Hinterspritzungen aufweist.

Die Schmelze 19 wird zumindest so lange in den Werkzeug-Hohlraum 12 des geschlossenen Spritzgießwerkzeugs 11 gespritzt, bis der den Folien-Wickelkörper 30 enthaltende Werkzeug-Hohlraum 12 auch mit der Schmelze 19 ausgefüllt ist. Um den Volumenschwund während des Abkühlens der Schmelze 19 in dem Werkzeug-Hohlraum 12 des geschlossenen Spritzgießwerkzeugs 11 auszugleichen, wird mit dem in den Figuren nicht gezeigten Schneckenkolben eine bestimmte Zeit lang nachgedrückt (Nachdruckphase). Nach dem Aushärten der Schmelze 19 liegt in dem Werkzeug-Hohlraum 12 des noch immer geschlossenen Spritzgießwerkzeugs 11 der fertig geformte Verbundkörper 10 vor.

Anschließend wird das Spritzgießwerkzeug 11 von seiner Werkzeug-Schließstellung 15 in seine Werkzeug-Öffnungsstellung 14 überführt wird, also wieder geöffnet, wobei oder wonach der separat handhabbare, eigensteife Verbund-Hohlkörper 10 aus dem Spritzgießwerkzeug 11 entnehmbar ist oder entnommen wird.

In dem fertigen Verbund-Hohlkörper 10 ist der innenliegende, erste Folienabschnitt-Rand 33.1 des aus dem Folien-Wickelkörper 30 gebildeten Etiketts 16 derart ausgebildet, dass bei ihrer Projektion in eine die Verbundkörper-Zentralachse 56 enthaltende, erste Ebene 44.1 (in Figur 7 die Blattebene) eine gerade, erste Projektionslinie 45.1 ausgebildet ist. Diese schließt mit der Verbundkörper-Zentralachse 56 einen spitzen, ersten Winkel 49.1 ein. Dieser weist beispielsweise ein Winkelmaß von etwa 7 Grad auf. In dem fertigen Verbund-Hohlkörper 10 ist auch der außenliegende, zweite Folienabschnitt-Rand 33.2 des aus dem Folien-Wickelkörper 30 gebildeten Etiketts 16 derart ausgebildet, dass bei ihrer Projektion in eine die Verbundkörper-Zentralachse 56 enthaltende, zweite Ebene 44.2 (in Figur 7 die Blattebene) eine gerade, zweite Projektionslinie 45.2 ausgebildet ist. Diese schließt mit der Verbundkörper-Zentralachse 56 einen spitzen, zweiten Winkel 49.2 ein. Dieser weist beispielsweise ein Winkelmaß von etwa 7 Grad auf.

Der Verbundkörper 10 erstreckt sich entlang seiner Verbundkörper-Zentralachse 58 und weist eine Verbundkörper-Wand 58 auf. Die Verbundkörper-Wand 58 weist eine um die Verbundkörper-Zentralachse 56 umlaufende und sich entlang der Verbundkörper-Zentralachse 56 erstreckende Verbundkörper-Mantel-Au-ßenfläche 52 des außenseitig bedruckten Etiketts 16 auf. Das Etikett 16 ist auf seiner von der Verbundkörper-Mantel-Außenfläche 52 bzw. Etikett-Außenseite wegweisenden Etikett-Innenseite 57 mit einem um die Verbundkörper-Zentralachse 56 umlaufenden und sich entlang der Verbundkörper-Zentralachse 56 erstreckenden Etikett-Trägerwandteil 18 der Verbundkörper-Wand 58 nicht zerstörungsfrei trennbar verbunden. Der Etikett-Trägerwandteil 18 besteht aus der verfestigten bzw. ausgehärteten Schmelze. Die Verbundkörper-Mantel-Außenfläche 52 des Etiketts 16 weist die wenigstens eine sich entlang der Verbundkörper-Zentralachse 56 erstreckende, außenliegende Verbundkörper-Wölbung 54 auf.

Bei dem Verbundkörper 10 überlappen sich der mit dem innenliegenden ersten Folienabschnitt-Rand 33.1 begrenzte, erste Folien-Endabschnitt 34.1 und der mit dem außenliegenden, zweiten Folienabschnitt-Rand 33.2 begrenzte, zweite Folien-Endabschnitt 34.2 in der Umfangsrichtung bzw. Umlaufrichtung 36 in einem Überlappungsabschnitt 50. Der Überlappungsabschnitt 50 weist in der Umfangsrichtung bzw. Umlaufrichtung 36 eine Überlappungsbreite 51 auf, die wenigstens 0,2 mm und maximal 4 mm beträgt.

Der mit dem erfindungsgemäßen Verfahren hergestellte Verbund-Hohlkörper 10 ist im Wesentlichen rotationssymmetrisch zu seiner Verbund-Hohlkörper-Zentralachse 56 gestaltet. Erweist an beliebigen Stellen entlang der Verbund-Hohlkörper-Zentralachse 56, jeweils in einer senkrecht zu der Verbund-Hohlkörper-Zentralachse 56 ausgebildeten, gedachten Schnittebene, jeweils im Wesentlichen einen Kreisring-Querschnitt auf.

Es versteht sich, dass der Verbundkörper entlang der Verbundkörper-Zentralachse, jeweils in einer senkrecht zu der der Verbundkörper-Zentralachse ausgebildeten, gedachten Schnittebene, jeweils auch andere Querschnitte aufweisen kann, beispielsweise einen elliptischen Querschnitt oder Ringquerschnitt, einen ovalen Querschnitt oder Ringquerschnitt oder einen eckigen Querschnitt oder Ringquerschnitt.

Entlang der Verbund-Hohlkörper-Zentralachse 56 betrachtet, weist die außenliegende Verbund-Hohlkörper-Mantelfläche 52 die wenigstens eine um die Verbund-Hohlkörper-Zentralachse 56 umlaufende, äußere, konvexe Wölbung 54 auf. Entlang der Verbund-Hohlkörper-Zentralachse 56 betrachtet, weist die innenliegende Verbund-Hohlkörper-Mantelfläche 53 die wenigstens eine um die Verbund-Hohlkörper-Zentralachse 56 umlaufende, innere, konkave Wölbung 55.1, 55.2 auf. Es versteht sich, dass die außenliegende Wölbung auch anders gestaltet sein kann, beispielsweise konkav. Es versteht sich, dass die innenliegende Wölbung auch anders gestaltet sein kann, beispielsweise konvex. Im Falle mehrerer unterschiedlicher Wölbungen entlang der Verbund-Hohlkörper-Zentralachse, können diese als eine Kombination von Wölbungen mit gleichgerichteten Krümmungen und/oder als eine Kombination von Wölbungen mit unterschiedlich gerichteten Krümmungen gestaltet sein, so dass beispielsweise entlang der Verbund-Hohlkörper-Zentralachse auf eine konvexe Wölbung eine konkave Wölbung folgen kann. In dem zuletzt genannten Fall könnte sich entlang der Verbund-Hohlkörper-Zentralachse betrachtet ein S-förmiger Wölbungsverlauf ergeben.

Zusammengefasst betrifft die Erfindung ein Verfahren zur Herstellung eines, Verbundkörpers, insbesondere Verbund-Hohlkörpers 10, durch Hinterspritzen einer Folien-Wickelkörper-Innenfläche 41.2 eines in einen Werkzeug-Hohlraum 12 eines Spritzgießwerkzeugs 11 überführten und zur Ausbildung eines Etiketts 16 bestimmten Folien-Wickelkörpers 30 mit einer fließfähigen und verfestigbaren Masse 19 mittels Spritzgießen, wobei der Verbundkörper 10 eine um seine Verbundkörper-Zentralachse 56 umlaufende und sich entlang der Verbundkörper-Zentralachse 56 erstreckende Verbundkörper-Mantel-Außenfläche 52 des Etiketts 16 aufweist, die wenigstens eine sich entlang der Verbundkörper-Zentralachse 56 erstreckende Verbundkörper-Wölbung 54.1, 54.2 aufweist. Der Folien-Wickelkörper 30 ist derart aus dem Folienabschnitt 31 durch Wickeln hergestellt, dass ein mit einem ersten Folienabschnitt-Rand 33.1 begrenzter, erster Folien-End-Abschnitt 34.1 und ein mit einem zweiten Folienabschnitt-Rand 33.2 begrenzter, zweiter Folien-End-Abschnitt 34.2 sich in einer Umlaufrichtung 36 um eine Folien-Wickelkörper-Zentralachse 38 in einem Überlappungsabschnitt 35 überlappen, so dass der erste Folienabschnitt-Rand 33.1 innenliegend angeordnet ist und der zweite Folienabschnitt-Rand 33.2 außenliegend angeordnet ist. Der Folien-Wickelkörper 30 ist derart ausgebildet und wird derart in einen Werkzeugform-Hohlraum 12 eines geöffneten Spritzgießwerkzeugs 11 überführt, dass nach dem Schließen des Spritzgießwerkzeugs 11 während des Hinterspritzens der Folien-Wickelkörper-Innenfläche 41.2 mit der Masse bzw. Schmelze 19, der innenliegende, erste Folienabschnitt-Rand 33.1 des den zweiten Folien-End-Abschnitt innenseitig überlappenden ersten Folien-End-Abschnitts 34.1 des Folien-Wickelkörpers 30 schräg zu der Haupt-Fließrichtung 43 der Fließfront der Masse 19 geneigt angeordnet ist.

### Bezugszeichenliste

- 10: Verbundkörper/Verbund-Hohlkörper/Becher
- 11: Spritzgießwerkzeug
- 11.1: erste Werkzeugform/Matrize
- 11.2: zweite Werkzeugform/Patrize
- 12: (äußerer) Werkzeug(form)-Hohlraum
- 13: Werkzeugkern
- 14: Werkzeug-Öffnungsstellung
- 15: Werkzeug-Schließstellung
- 16: Etikett
- 18: Etikett-Trägerwandteil
- 19: Masse/Schmelze
- 20: Werkzeug(form)-Hohlraum-Zentralachse
- 21: (äußere) Werkzeug(form)-Hohlraum-Mantelfläche
- 22.1: (äußere) Werkzeug(form)-Hohlraum-Wölbung (konkave) Wölbung
- 22.2: (äußere) Werkzeug(form)-Hohlraum-Wölbung (konkave) Wölbung
- 23: Werkzeugkern-Zentralachse
- 24: Werkzeugkern-Mantelfläche/ (innere) Werkzeug-Hohlraum-Mantelfläche
- 25.1: Werkzeugkern-Wölbung/ innere Werkzeug-Hohlraum-Wölbung
- 25.2: Werkzeugkern-Wölbung/ innere Werkzeug-Hohlraum-Wölbung
- 26: Ringspalt/Ringraum/Hohlraum
- 27.1: erste Basisfläche von 11.1
- 27.2: zweite Basisfläche von 13
- 28: Basis-Hohlraum
- 29: Zentralöffnung/Anguss
- 30: Folien-Wickelkörper
- 31: Folienabschnitt
- 32.1: (bedruckte)erste Folienfläche
- 32.2: zweite Folienfläche
- 33.1: erster (innenliegender) Folienabschnitt-Rand
- 33.2: zweiter (außenliegender) Folienabschnitt-Rand
- 33.3: dritter Folienabschnitt-Rand
- 33.4: vierter Folienabschnitt-Rand
- 34.1: erster Folien-Endabschnitt
- 34.2: zweiter Folien-Endabschnitt
- 35: Überlappungsabschnitt/Überlappungsbereich
- 36: Umlaufrichtung/Umfangsrichtung
- 37: Überlappungsbreite
- 38: Folien-Wickelkörper-Zentralachse
- 39: Folien-Wickelkörper-Wand
- 40: Folien-Wickelkörper-Innenraum/Folien-Wickelkörper-Hohlraum
- 41.1: (außenseitig) (bedruckte) Folien-Wickelkörper-Außenfläche
- 41.2: Folien-Wickelkörper-Innenfläche
- 42: Einführstellung
- 43: Haupt-Fließrichtung
- 44.1: erste Ebene (Blattebene)
- 44.2: zweite Ebene (Blattebene)
- 45.1: erste Projektionslinie
- 45.2: zweite Projektionslinie
- 46: Fließrichtungspfeil
- 47: Stoß
- 49.1: erster Winkel
- 49.2: zweiter Winkel
- 50: Überlappungsabschnitt von 10
- 51: Überlappungsbreite
- 52: außenliegende/äußere Verbundkörper-Mantelfläche/Verbundkörper-Mantel-Außenfläche
- 53: innenliegende/innere Verbundkörper-Mantelfläche/ Verbundkörper-Mantel-Innenfläche
- 54.1: außenliegende Verbundkörper-Wölbung/Verbund-Hohlkörper-Wölbung (äußere) Wölbung (konvex)
- 54.2: außenliegende Verbundkörper-Wölbung/Verbund-Hohlkörper-Wölbung (äußere) Wölbung (konvex)
- 55.1: innenliegende Verbundkörper-Wölbung/Verbund-Hohlkörper-Wölbung (innere) Wölbung (konkav)
- 55.2: innenliegende Verbundkörper-Wölbung/Verbund-Hohlkörper-Wölbung (innere) Wölbung (konkav)
- 56: Verbundkörper-Zentralachse/Verbund-Hohlkörper-Zentralachse
- 57: Etikett-Innenseite
- 58: Verbundkörper-Wand
- 61.1: erste Folienabschnitt-Länge von 33.1
- 61.2: zweite Folienabschnitt-Länge von 33.2
- 62.1: erste Folienabschnitt-Rand-Stirnfläche von 33.1
- 62.2: zweite Folienabschnitt-Rand-Stirnfläche von 33.2
- 63.1: Rand-Ecke
- 63.2: Rand-Ecke
- 63.3: Rand-Ecke
- 63.4: Rand-Ecke

## Patentansprüche

1. Verfahren zur Herstellung eines Verbundkörpers (10) mittels Spritzgießen,
wobei der Verbundkörper (10) sich entlang seiner Verbundkörper-Zentralachse (56) erstreckt und eine Verbundkörper-Wand (58) aufweist, die eine um die Verbundkörper-Zentralachse (56) umlaufende und sich entlang der Verbundkörper-Zentralachse (56) erstreckende Verbundkörper-Mantel-Außenfläche (52) eines Etiketts (16) aufweist,
das auf seiner von der Verbundkörper-Mantel-Außenfläche (52) weg weisenden Etikett-Innenseite (57) mit einem um die Verbundkörper-Zentralachse (56) umlaufenden und sich entlang der Verbundkörper-Zentralachse (56) erstreckenden Etikett-Trägerwandteil (18) der Verbundkörper-Wand (58) nicht zerstörungsfrei trennbar verbunden ist,
**dadurch gekennzeichnet, dass**
die Verbundkörper-Mantel-Außenfläche (52) des Etiketts (16) wenigstens eine sich entlang der Verbundkörper-Zentralachse (56) erstreckende, Verbundkörper-Wölbung (54.1, 54.2) aufweist,
und wobei zur Herstellung des Verbundkörpers (10) ein aus wenigstens zwei Werkzeugformen (11.1, 11.2) gebildetes Spritzgießwerkzeug (11) verwendet wird,
und wobei eine erste Werkzeugform (11.1) der wenigstens zwei Werkzeugformen (11.1, 11.2) einen Werkzeugform-Hohlraum (12) aufweist, der mit einer um seine Werkzeugform-Hohlraum-Zentralachse (20) umlaufenden und sich entlang der Werkzeugform-Hohlraum-Zentralachse (20) erstreckenden Werkzeugform-Hohlraum-Mantelfläche (21) begrenzt ist, die wenigstens eine sich entlang der Werkzeugform-Hohlraum-Zentralachse (20) erstreckende Werkzeugform-Hohlraum-Wölbung (22.1, 22.2) aufweist,
und wobei das Sprießgießwerkzeug (11) von einer Werkzeug-Öffnungsstellung (14), in der die erste Werkzeugform (11.1) und eine zweite Werkzeugform (11.2) der wenigstens zwei Werkzeugformen (11.1, 11.2) voneinander abgehoben sind, in eine Werkzeug-Schließstellung (15) überführbar ist, und umgekehrt, in der die erste Werkzeugform (11.1) und die zweite Werkzeugform (11.2) unter Einschließen eines den Werkzeugform-Hohlraum (12) der ersten Werkzeugform (11.1) enthaltenden Werkzeug-Hohlraums zur Aufnahme eines zur Ausbildung des Etiketts (16) bestimmten Folien-Wickelkörpers (30) und zur Aufnahme einer zur Ausbildung des Etikett-Träger-Wandteils (18) bestimmten, fließfähigen, verfestigbaren Masse (19) aneinander anliegen,
wobei in einem ersten Verfahrensschritt
der Folien-Wickelkörper (30)
der eine um seine Folien-Wickelkörper-Zentralachse (38) in einer Umlaufrichtung (36) umlaufende und sich entlang der Folien-Wickelkörper-Zentralachse (38) erstreckende Folien-Wickelkörper-Wand (39) aufweist, die einen Folien-Wickelkörper-Innenraum (40) des Folien-Wickelkörpers (30) umschließt und die eine Folien-Wickelkörper-Außenfläche (41.1) und eine von dieser weg weisende Folien-Wickelkörper-Innenfläche (41.2) aufweist, die den Folien-Wickelkörper-Innenraum (40) begrenzt und
der ausgehend von einem biegsamen und wickelbaren Folienabschnitt (31), der eine erste Folienfläche (32.1) und eine von dieser weg weisende, zweite Folienfläche (32.2) aufweist und der einen mit eine ersten Folienabschnitt-Rand (33.1) begrenzten, ersten Folien-End-Abschnitt (34.1) und einen mit einem zweiten Folienabschnitt-Rand (33.2) begrenzten, zweiten Folien-Endabschnitt (34.2) aufweist, wobei der erste Folienabschnitt-Rand (33.1) sich über eine erste Folienabschnitt-Rand-Länge (61.1) erstreckt und mit einer ersten Folienabschnitt-Rand-Stirnfläche (62.1) begrenzt ist,
derart aus dem Folienabschnitt (31) durch Wickeln hergestellt ist, dass der erste Folien-End-Abschnitt (34.1) und der zweite Folien-End-Abschnitt (34.2) sich in der Umlaufrichtung (36) in einem sich entlang der Folienhohlkörper-Zentralachse 38 erstreckenden Überlappungsabschnitt (35) überlappen, so dass der erste Folienabschnitt-Rand (33.1) innenliegend angeordnet ist und der zweite Folienabschnitt-Rand (33.2) außenliegend angeordnet ist,
derart in den Werkzeugform-Hohlraum (12) der wenigstens einen ersten Werkzeugform (11.1) des sich in seiner Werkzeug-Öffnungsstellung (14) befindlichen Spritzgießwerkzeugs (11) überführt wird, dass seine Folien-Wickelkörper-Außenfläche (41.1) einer die wenigstens eine Werkzeugform-Hohlraum-Wölbung (22.1, 22.2) aufweisende Werkzeugform-Hohlraum-Mantelfläche (21) unmittelbar gegenüber liegt,
wobei in einem zweiten Verfahrensschritt
das Spritzgießwerkzeug (11) von seiner Werkzeug-Öffnungsstellung (14) in seine Werkzeug-Schließstellung (15) überführt wird, in welcher die fließfähige, verfestigbare Masse (19) in den Werkzeug-Hohlraum (12) des geschlossenen Spritzgießwerkzeugs (11) gespritzt und die Folien-Wickelkörper-Innenfläche (41.2) des bereits in dem Werkzeug-Hohlraum (12) angeordneten Folien-Wickelkörpers (30) mit der fließfähigen, verfestigbaren Masse (19) hinterspritzt wird,
wobei oder so dass eine Fließfront der Masse (19) in unmittelbarem Kontakt mit der Folien-Wickelkörper-Innenfläche (41.2) in einer Haupt-Fließrichtung (43) entlang der Folien-Wickelkörper-Innenfläche (41.2) fließt,
wobei die fließfähige, verfestigbare Masse (19) zumindest so lange in den Werkzeug-Hohlraum (12) des geschlossenen Spritzgießwerkzeugs (11) gespritzt wird, bis der den Folien-Wickelkörper (30) enthaltende Werkzeug-Hohlraum (12) auch mit der Masse (19) ausgefüllt ist,
wobei und/oder wonach im Zuge eines Verfestigens der Masse (19) in dem Werkzeug-Hohlraum (12) des geschlossenen Spritzgießwerkzeugs (11) der Verbundkörper (10) ausgebildet wird,
wobei in einem dritten Verfahrensschritt das Spritzgießwerkzeug (11) von seiner Werkzeug-Schließstellung (15) in seine Werkzeug-Öffnungsstellung (14) überführt wird, wobei oder wonach der separat handhabbare Verbundkörper (10) aus dem Spritzgießwerkzeug (11) entnehmbar ist oder entnommen wird,
wobei
der Folien-Wickelkörper (30) derart ausgebildet ist und derart in den Werkzeugform-Hohlraum (12) der wenigstens einen ersten Werkzeugform (11.1) des geöffneten Spritzgießwerkzeugs (11) überführt wird, dass nach dem Schließen des Spritzgießwerkzeugs (11) während des Hinterspritzens der Folien-Wickelkörper-Innenfläche (41.2) mit der fließfähigen, verfestigbaren Masse (19), der innenliegende, erste Folienabschnitt-Rand (33.1) des den zweiten Folien-Endabschnitt (34.2) innenseitig überlappenden ersten Folien-End-Abschnitts (34.1) im Wesentlichen über seine gesamte, erste Folienabschnitt-Rand-Länge (61.1) durchgehend schräg zu der Haupt-Fließrichtung (43) der an der Folien-Wickelkörper-Innenfläche (41.2) entlang fließenden Fließfront der Masse (40) angeordnet ist und die erste Folienabschnitt-Rand-Stirnfläche (62.1) des ersten Folienabschnitt-Rands (33.1) im Wesentlichen nicht in eine Richtung entgegen der Haupt-Fließrichtung (43) weist.

2. Verfahren nach Anspruch 1, **dadurch gekennzeichnet, dass** sich bei dem in den Werkzeug-Hohlraum (12) überführten Folien-Wickelkörper (30) in einem Zeitraum, spätestens beginnend ab dem Einspritzen der fließfähigen, verfestigbaren Masse (19) in den Werkzeug-Hohlraum (12) des geschlossenen Spritzgießwerkzeugs (11) bis zur Ausbildung des Verbundkörpers (10) in dem Werkzeug-Hohlraum (12), der mit dem innenliegenden, ersten Folienabschnitt-Rand 33.1 begrenzte, erste Folien-Endabschnitt (34.1) und der mit dem außenliegenden, zweiten Folienabschnitt-Rand (33.2) begrenzte, zweite Folien-Endabschnitt (34.2) sich in dem Überlappungsabschnitt (35) in der Umlaufrichtung (36) um wenigstens 0,2 mm überlappen.

3. Verfahren nach Anspruch 1 oder 2, **dadurch gekennzeichnet, dass** der innenliegende, erste Folienabschnitt-Rand (33.1) des aus dem Folien-Wickelkörper (30) gebildeten Etiketts (16) derart ausgebildet wird, dass bei seiner Projektion in eine die Verbundkörper-Zentralachse (56) enthaltende, erste Ebene (44.1) eine gerade, erste Projektionslinie (45.1) ausgebildet ist.

4. Verfahren nach Anspruch 3, **dadurch gekennzeichnet, dass** die gerade, erste Projektionslinie (45.1) mit der Verbundkörper-Zentralachse (56) einen spitzen, ersten Winkel (49.1) einschließt.

5. Verfahren nach Anspruch 4, **dadurch gekennzeichnet, dass** der erste Winkel (49.1) ein Winkelmaß zwischen 2 Grad und 15 Grad aufweist.

6. Verfahren nach einem der vorstehenden Ansprüche, **dadurch gekennzeichnet, dass** der außenliegende, zweite Folienabschnitt-Rand (33.2) des aus dem Folien-Wickelkörper (30) gebildeten Etiketts (16) derart ausgebildet wird, dass bei seiner Projektion in eine die Verbundkörper-Zentralachse (56) enthaltende, zweite Ebene (44.2) eine gerade, zweite Projektionslinie (45.2) ausgebildet ist.

7. Verfahren nach Anspruch 6, **dadurch gekennzeichnet, dass** die gerade, zweite Projektionslinie (45.2) mit der Verbundkörper-Zentralachse (56) einen spitzen, zweiten Winkel (49.2) einschließt.

8. Verfahren nach Anspruch 7, **dadurch gekennzeichnet, dass** der zweite Winkel (49.2) ein Winkelmaß zwischen 2 Grad und 15 Grad aufweist.

9. Verfahren nach einem der Ansprüche 4 oder 5 und nach einem der Ansprüche 7 oder 8, **dadurch gekennzeichnet, dass** der erste Winkel (49.1) und der zweite Winkel (49.2) gleich groß sind.

## Claims

1. Method for producing a composite body (10) by injection moulding,
wherein the composite body (10) extends along its composite body central axis (56) and has a composite body wall (58) that has a composite body external mantle surface (52) of a label (16) which encircles the composite body central axis (56) and extends along the composite body central axis (56),
which on the label inner side (57) thereof facing away from the composite body external mantle surface (52) is connected in a manner that cannot be separated non-destructively to a label support wall part (18) of the composite body wall (58) that encircles the composite body central axis (56) and extends along the composite body central axis (56),
**characterized in that**
the composite body external mantle surface (52) of the label (16) has at least one composite body curvature (54.1, 54.2) which extends along the composite body central axis (56), and wherein an injection mould (11) consisting of at least two mould dies (11.1, 11.2) is used to produce the composite body (10),
and wherein a first mould die (11.1) of the at least two mould dies (11.1, 11.2) has a die cavity (12) which is delimited by a die cavity mantle surface (21) that encircles its die cavity central axis (20) and extends along the die cavity central axis (20), which has at least one die cavity curvature (22.1, 22.2) that extends along the mould die cavity central axis (20),
and wherein the injection mould (11) can be shifted between an open mould position (14), in which the first mould die (11.1) and a second mould die (11.2) of the at least two mould dies (11.1, 11.2) are separated from each other, and a closed mould position (15), in which the first mould die (11.1) and the second mould die (11.2) fit closely against each other, thereby enclosing a mould cavity that contains the mould die cavity (12) of the first mould die (11.1), to accommodate a foil wrapping body (30) intended to create the label (16), and to accommodate a mass (19) that can flow and solidify and is intended to create the label support wall part (18),
wherein in a first method step
the foil wrapping body (30)
which includes a foil wrapping body wall (39) that extends around its foil wrapping body central axis (38) in a circumferential direction (36) and extends along the foil wrapping body central axis (38), which wall encloses a foil wrapping body interior space (40) of the foil wrapping body (30), and which has a foil wrapping body external surface (41.1) and a foil wrapping body internal surface (41.2) that faces away from said external surface and delimits the foil wrapping body interior space (40), and
which on the basis of a flexible, rollable foil section (31) which has a first foil surface (32.1) and a second foil surface (32.2) facing away from said first surface and which has a first foil end section (34.1) delimited by a first foil section border(33.1), and a second foil end section (34.2) delimited by a second foil section border (33.2),
wherein the first foil section border (33.1) extends of a first foil section border length (61.1) and is delimited by a first foil section border end face (62.1),
is produced from the foil section (31) by wrapping in such manner that the first foil end section (34.1) and the second foil end section (34.2) overlap in the circumferential direction (36) in an overlap section (35) that extends along the foil hollow body central axis (38), so that the first foil section border (33.1) is arranged on the inside and the second foil section border (33.2) is arranged on the outside,
is transferred to the mould die cavity (12) of the at least one first mould die (11.1) of the injection mould (11), which is in its open mould position (14), in such manner that its foil wrapping body external surface (41.1) is positioned directly opposite a mould die cavity mantle surface (21) that includes the at least one mould die cavity curvature (22.1, 22.2),
wherein in a second method step
the injection mould (11) is shifted from its open mould position (14) into its closed mould position (15), in which the flowable, hardenable mass (19) is injected into the mould cavity (12) of the closed injection mould (11) and the foil wrapping body internal surface (41.2) of the foil wrapping body (30) already positioned in the mould cavity (12) is back injection moulded with the flowable, hardenable mass (19),
wherein or so that a flow front on the mass (19) flows in a main flow direction (43) along the foil wrapping body internal surface (41.2) in direct contact with the foil wrapping body internal surface (41.2),
wherein the flowable, hardenable mass (19) is injected into the mould cavity (12) of the closed injection mould (11) at least until the mould cavity (12) that contains the foil wrapping body (30) is also completely filled with the mass (19),
at which time and/or after which the composite body (10) is formed while the mass (19) is solidifying in the mould cavity (12) of the closed injection mould (11),
wherein in a third method step
the injection mould (11) is shifted from its closed mould position (15) into its open mould position (14), at which time or after which the separately workable composite body (10) can be or is removed from the injection mould (11),
wherein
the foil wrapping body (30) is designed in such manner and is transferred to the mould die cavity (12) of the at least one first mould die (11.1) of the open injection mould (11) in such manner that after the injection mould (11) is closed, while the foil wrapping body internal surface (41.2) is back injection moulded with the flowable, hardenable mass (19), the inner, first foil section border (33.1) of the first foil end section (34.1), which overlaps the second foil end section (34.2) on the inside, is arranged continuously aslant the main flow direction (43) of the flow front of the mass (40) flowing along the foil wrapping body internal surface (41.2) substantially over the entire length of its first foil section border (61.1), and the first foil section border end face (62.1) of the first foil section border (33.1) substantially does not face in a direction counter to the main flow direction (43).

2. Method according to Claim 1, **characterized in that** in the foil wrapping body (30) transferred to the mould cavity (12), in a timeframe beginning no later than the start of injecting the flowable, hardenable mass (19) into the mould cavity (12) of the closed injection mould (11) until the formation of the composite body (10) in the mould cavity (12), the first foil end section (34.1), delimited by the first foil section border (33.1) arranged on the inside, and the second foil end section (34.2), delimited by the second foil section border (33.2) arranged on the outside, overlap by at least 0.2 mm in the circumferential direction (36) in the overlap portion (35).

3. Method according to Claim 1 or 2, **characterized in that** the inner, first foil section border (33.1) of the label (16) formed from the foil wrapping body (30) is constructed such that when it is projected into a first plane (44.1) that includes the composite body central axis (56), a straight, first projection line (45.1) is created.

4. Method according to Claim 3, **characterized in that** the straight first projection line (45.1) forms an acute first angle (49.1) with the composite body central axis (56) .

5. Method according to Claim 4, **characterized in that** the first angle (49.1) has an angular dimension between 2 degrees and 15 degrees.

6. Method according to any one of the preceding claims, **characterized in that** the outer, second foil section border (33.2) of the label (16) formed from the foil wrapping body (30) is constructed such that when it is projected into a second plane (44.2) that includes the composite body central axis (56), a straight, second projection line (45.2) is created.

7. Method according to Claim 6, **characterized in that** the straight, second projection line (45.2) forms an acute second angle (49.2) with the composite body central axis (56).

8. Method according to Claim 7, **characterized in that** the second angle (49.2) has an angular dimension between 2 degrees and 15 degrees.

9. Method according to one of Claims 4 or 5 and according to one of Claims 7 or 8, **characterized in that** the first angle (49.1) and the second angle (49.2) are the same size.

## Revendications

1. Procédé de fabrication d'un corps composite (10) par moulage par injection,
dans lequel le corps composite (10) s'étend le long de son axe central de corps composite (56) et présente une paroi de corps composite (58) qui présente une surface extérieure de chemise de corps composite (52) passant autour de l'axe central de corps composite (56) et s'étendant le long de l'axe central de corps composite (56) d'une étiquette (16),
qui est connectée en étant séparable de manière non destructive, sur sa face intérieure d'étiquette (57) détournée de la surface extérieure de chemise de corps composite (52), à une pièce de paroi porteuse d'étiquette (18) passant autour de l'axe central de corps composite (56) et s'étendant le long de l'axe central de corps composite (56) de la paroi de corps composite (58),
**caractérisé en ce que** la surface extérieure de chemise de corps composite (52) de l'étiquette (16) présente au moins un bombement de corps composite (54.1, 54.2) s'étendant le long de l'axe central de corps composite (56),
et, pour fabriquer le corps composite (10), un outil de moulage par injection (11) composé d'au moins deux moules (11.1, 11.2) est utilisé et
un premier moule (11.1) parmi les au moins deux moules (11.1, 11.2) présente une cavité de moule (12) qui est limitée par une surface de chemise de cavité de moule (21) passant autour de son axe central de cavité de moule (20) et s'étendant le long de l'axe central de cavité de moule (20) et qui présente au moins un bombement de cavité de moule (22.1, 22.2) s'étendant le long de l'axe central de cavité de moule (20),
et l'outil de moulage par injection (11) peut être passé d'une position d'ouverture d'outil (14), dans laquelle le premier moule (11.1) et un second moule (11.2) parmi les au moins deux moules (11.1, 11.2) sont soulevés l'un de l'autre, à une position de fermeture d'outil (15) et inversement, dans laquelle le premier moule (11.1) et le second moule (11.2), en circonscrivant une cavité d'outil contenant la cavité de moule (12) du premier moule (11.1) pour recevoir un corps d'enroulement de film (30) destiné à constituer l'étiquette (16) et pour recevoir une masse (19) solidifiable fluide destinée à constituer la partie paroi porteuse d'étiquette (18),
dans lequel, dans une première étape opératoire,
le corps d'enroulement de film (30)
qui présente une paroi de corps d'enroulement de film (39) passant autour de son axe central de corps d'enroulement de film (38) dans un sens périphérique (36) et s'étendant le long de l'axe central de corps d'enroulement de film (38) et qui circonscrit un espace intérieur de corps d'enroulement de film (40) du corps d'enroulement de film (30) et qui présente une surface extérieure de corps d'enroulement de film (41.1) et une surface intérieure de corps d'enroulement de film (41.2) détournée de celle-ci et qui limite l'espace intérieur de corps d'enroulement de film (40) et
qui, en partant d'une section de fibre enroulable et flexible (31) qui présente une première surface de film (32.1) et une seconde surface de film (32.2) détournée de celle-ci et qui présente une première section terminale de film (34.1) limitée par un premier bord de section de film (33.1) et une seconde section terminale de film (34.2) limitée par un second bord de section de film (33.2), le premier bord de section de film (33.1) s'étendant sur une première longueur de bord de section de film (61.1) et est limitée par une première surface avant de bord de section de film (62.1),
est fabriqué par enroulement à partir de la section de film (31) de manière à ce que la première section terminale de film (34.1) et la seconde section terminale de film (34.2) se chevauchent dans le sens périphérique (36) dans une section de chevauchement (35) s'étendant le long de l'axe central de corps creux de film (38), de sorte que le premier bord de section de film (33.1) est disposé à l'intérieur et que le second bord de section de film (33.2) est disposé à l'extérieur,
est transféré dans la cavité de moule (12) de l'au moins un moule (11.1) de l'outil de moulage par injection (11) se trouvant dans sa position d'ouverture d'outil (14) de manière à ce que sa surface extérieure de corps d'enroulement de film (41.1) se trouve directement en face d'une surface de chemise de cavité de moule (21) présentant l'au moins un bombement de cavité de moule (22.1, 22.2),
sachant que, dans une deuxième étape opératoire,
l'outil de moulage par injection (11) est passé de sa position d'ouverture d'outil (14) dans sa position de fermeture d'outil (15) dans laquelle la masse solidifiable fluide (19) est injectée dans la cavité d'outil (12) de l'outil de moulage par injection fermé (11) et la surface intérieure de corps d'enroulement de film (41.2) du corps d'enroulement de film (30) déjà disposé dans la cavité d'outil (12) reçoit une injection par l'arrière de masse solidifiable fluide (19), sachant que ou de manière à ce qu'un front d'écoulement de la masse (19) en contact direct avec la surface intérieure de corps d'enroulement de film (41.2) s'écoule dans un sens d'écoulement principal (43) le long de la surface intérieure de corps d'enroulement de film (41.2),
la masse solidifiable fluide (19) étant injectée dans la cavité d'outil (12) de l'outil de moulage par injection fermé (11) au moins jusqu'à ce que la cavité d'outil (12) contenant le corps d'enroulement de film (30) soient aussi 32 par la masse (19),
sachant que et/ou après quoi, au cours d'une solidification de la masse (19) dans la cavité d'outil (12) de l'outil de moulage par injection fermé (11), le corps composite (10) est constitué,
sachant que, dans une troisième étape opératoire,
l'outil de moulage par injection (11) est passé de sa position de fermeture d'outil (15) dans sa position d'ouverture d'outil (14), sachant que ou après quoi le corps composite manipulable séparément (10) peut être sorti ou est sorti de l'outil de moulage par injection (11),
le corps d'enroulement de film (30) est réalisé et transféré dans la cavité de moule (12) de l'au moins un premier moule (11.1) de l'outil de moulage par injection ouvert (11) de manière à ce que, après la fermeture de l'outil de moulage par injection (11) pendant l'injection par l'arrière pratiquée dans la surface intérieure de corps d'enroulement de film (41.2) avec la masse fluide solidifiable (19), le premier bord de section de film intérieure (33.1) de la première section terminale de film (34.1) chevauchant à l'intérieur la seconde section terminale de film (34.2) est disposé sensiblement sur toute sa première longueur de bord de section de film (61.1) en continu obliquement par rapport au sens d'écoulement principal (43) du front d'écoulement s'écoulant le long de la surface intérieure de corps d'enroulement de film (41.2) de la masse (40) et que la première surface avant de bord de section de film (62.1) du premier bord de section de film (33.1) n'est pas sensiblement tournée dans un sens opposé au sens d'écoulement principal (43).

2. Procédé selon la revendication 1, **caractérisé en ce que**, pour le corps d'enroulement de film (30) transféré dans la cavité d'outil (12), dans une période commençant au plus tard à partir de l'injection de la masse fluide solidifiable (19) dans la cavité d'outil (12) de l'outil de moulage par injection fermé (11) jusqu'à la constitution du corps composite (10) dans la cavité d'outil (12), la première section terminale de film (34.1) limitée par le premier bord de section de film intérieur (33.1) et la seconde section terminale de film (34.2) limitée par le second bord de section de film extérieur (33.2) se chevauchent dans la section de chevauchement (35) dans le sens périphérique (36) d'au moins 0,2 mm.

3. Procédé selon la revendication 1 ou 2, **caractérisé en ce que** le premier bord de section de film intérieur (33.1) de l'étiquette (16) constituée du corps d'enroulement de film (30) est réalisé de manière à ce que, dans le cas de sa projection dans un premier plan (44.1) contenant l'axe central du corps composite (56), une première ligne de projection droite (45.1) soit formée.

4. Procédé selon la revendication 3, **caractérisé en ce que** la première ligne de projection droite (45.1) circonscrit un premier angle aigu (49.1) avec l'axe central de corps composite (56).

5. Procédé selon la revendication 4, **caractérisé en ce que** le premier angle (49.1) présente une mesure d'angle de 2 à 15 degrés.

6. Procédé selon une des revendications précédentes, **caractérisé en ce que** le second bord de section de film extérieur (33.2) de l'étiquette (16) constitué du corps d'enroulement de fil (30) est réalisé de manière à ce que, dans le cas de sa projection dans un second plan (44.2) contenant l'axe central de corps composite (56), une seconde ligne de projection droite (45.2) soit formée.

7. Procédé selon la revendication 6, **caractérisé en ce que** la seconde ligne de projection droite (45.2) circonscrit un second angle aigu (49.2) avec l'axe central de corps composite (56).

8. Procédé selon la revendication 7, **caractérisé en ce que** le second angle (49.2) présente une mesure d'angle de 2 à 15 degrés.

9. Procédé selon une des revendications 4 ou 5 et selon une des revendications 7 ou 8, **caractérisé en ce que** le premier angle (49.1) et le second angle (49.2) sont identiques.
